# EUROPEAN PATENT APPLICATION

(11) **EP 4 269 468 A1**
(43) Date of publication of application: **01.11.2023**
(21) Application number: 21910482.5
(22) Date of filing: 14.12.2021
(51) Int. Cl.: C08G 65/336, C09D 171/02, C09K 3/00, C09K 3/18

(54) **SURFACE TREATMENT AGENT**

(30) Priority: 23.12.2020 JP 2020214097
(71) Applicant: DAIKIN INDUSTRIES, LTD., Osaka-shi, Osaka 530-0001 (JP)
(72) Inventor: YAMASHITA, Tsuneo, Osaka-shi, Osaka 530-8323 (JP); MAEHIRA, Takeshi, Osaka-shi, Osaka 530-8323 (JP); MITSUHASHI, Hisashi, Osaka-shi, Osaka 530-8323 (JP)
(74) Representative: Hoffmann Eitle
(86) International application number: PCT/JP2021/046080
(87) International publication number: WO 2022/138333

(57) **Abstract**

The present invention provides a fluoropolyether group-containing silane compound represented by the following formula (1) or (2) wherein the symbols are as defined in the description.

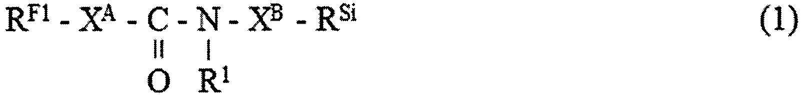

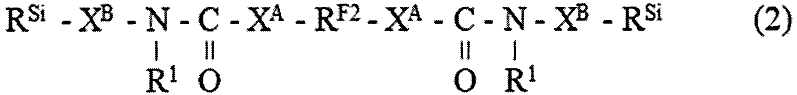

## Description

### Technical Field

The present disclosure relates to a novel fluoropolyether group-containing silane compound and a surface-treating agent containing such a compound.

### Background Art

Certain types of fluoropolyether group-containing silane compounds are known to be capable of providing excellent water-repellency, oil-repellency, antifouling properties, and the like when used in surface treatment of a substrate. A layer obtained from a surface-treating agent containing a fluoropolyether group-containing silane compound (hereinafter, also referred to as a "surface-treating layer") is applied as a so-called functional thin film to a large variety of substrates such as glass, plastics, fibers, sanitary articles, and building materials (Patent Literature 1).

### Citation List

### Patent Literature

Patent Literature 1: JP 2014-218639 A

### Summary of Invention

### Technical Problem

The fluoropolyether group-containing silane compound described in Patent Literature 1 can provide a surface-treating layer having an excellent function, but a surface-treating layer having higher durability is required.

An object of the present disclosure is to provide a fluoropolyether group-containing compound capable of forming a surface-treating layer having higher durability or, in particular, friction durability and chemical resistance.

### Solution to Problem

The present disclosure includes the following embodiments.
[1] A fluoropolyether group-containing silane compound represented by the following formula (1) or (2): 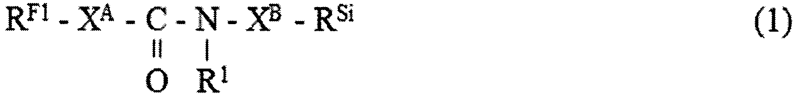 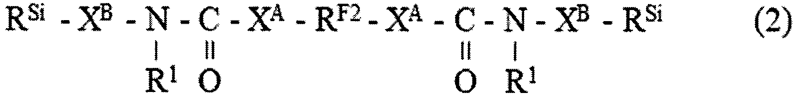 wherein
   R^{F1} is Rf¹-R^{F}-O_{q}-;
   R^{F2} is -Rf²ₚ-R^{F}-O_{q}-;
   Rf¹ is a C₁₋₁₆ alkyl group optionally substituted with one or more fluorine atoms;
   Rf² is a C₁₋₆ alkylene group optionally substituted with one or more fluorine atoms;
   R^{F} is each independently a divalent fluoropolyether group;
   p is 0 or 1;
   q is each independently 0 or 1;
   R¹ is each independently -R³-(OR²)ₘ-Oₙ-R⁴-R⁵;
   R² is each independently at each occurrence a C₁₋₆ alkylene group;
   m is an integer of 2 to 10;
   n is 0 or 1;
   R³ is a single bond or a C₁₋₆ alkylene group;
   R⁴ is a single bond or a C₁₋₆ alkylene group;
   R⁵ is a hydrogen atom or R^{Si};
   R^{Si} is each independently a monovalent group containing a Si atom to which a hydroxyl group or a hydrolyzable group is bonded;
   X^{A} is each independently a single bond or a group represented by the following formula:

      -(X⁵¹)ₚ₅-

      wherein
   X⁵¹ is each independently at each occurrence a group selected from the group consisting of -O-, -S-, an o-, m- or p-phenylene group, -C(O)O-, -OC(O)-, -Si(R⁵³)₂-, - (Si(R⁵³)₂O)ₘ₅-Si(R⁵³)₂-, -CONR⁵⁴-, -NR⁵⁴CO-, -O-CONR⁵⁴-, -NR⁵⁴COO-, -NR⁵⁴-, and -(CH₂)ₙ₅-,
   R⁵³ is each independently at each occurrence a phenyl group, a C₁₋₆ alkyl group, or a C₁₋₆ alkoxy group,
   R⁵⁴ is each independently at each occurrence a hydrogen atom, a phenyl group, or a C₁₋₆ alkyl group,
   m5 is each independently at each occurrence an integer of 1 to 100,
   n5 is each independently at each occurrence an integer of 1 to 20, and
   p5 is an integer of 1 to 10; and
   X^{B} is each independently a single bond or a group represented by the following formula:

      - (X⁶¹)ₚ₆-

      wherein
   X⁶¹ is each independently at each occurrence a group selected from the group consisting of -O-, -S-, an o-, m- or p-phenylene group, -C(O)O-, -OC(O)-, -Si(R⁶³)₂-, - (Si(R⁶³)₂O)ₘ₆-Si(R⁶³)₂-, -CONR⁶⁴-, -NR⁶⁴CO-, -O-CONR⁶⁴-, -NR⁶⁴COO-, -NR⁶⁴-, and -(CH₂)ₙ₆-,
   R⁶³ is each independently at each occurrence a phenyl group, a C₁₋₆ alkyl group, or a C₁₋₆ alkoxy group,
   R⁶⁴ is each independently at each occurrence a hydrogen atom, a phenyl group, or a C₁₋₆ alkyl group,
   m6 is each independently at each occurrence an integer of 1 to 100,
   n6 is each independently at each occurrence an integer of 1 to 20, and
   p6 is an integer of 1 to 10.
[2] The fluoropolyether group-containing silane compound according to [1], wherein
   Rf¹ is each independently at each occurrence a C₁₋₁₆ perfluoroalkyl group, and
   Rf² is each independently at each occurrence a C₁₋₆ perfluoroalkylene group.
[3] The fluoropolyether group-containing silane compound according to [1] or [2], wherein R^{F} is each independently at each occurrence a group represented by the following formula:

   -(OC₅F₁₂)ₐ-(OC₅F₁₀)_{b}-(OC₄F₈)_{c}-(OC₃R^{Fa}₆)_{d}-(OC₂F₄)ₑ-(OCF₂)_{f}-

   wherein R^{Fa} is each independently at each occurrence a hydrogen atom, a fluorine atom, or a chlorine atom, and
   a, b, c, d, e, and f are each independently an integer of 0 to 200, the sum of a, b, c, d, e, and f is 1 or more, and the occurrence order of the respective repeating units enclosed in parentheses provided with a, b, c, d, e, or f is not limited in the formula, provided that when all R^{Fa} groups are hydrogen atoms or chlorine atoms, at least one of a, b, c, e, and f is 1 or more.
[4] The fluoropolyether group-containing silane compound according to [3], wherein R^{Fa} is a fluorine atom.
[5] The fluoropolyether group-containing silane compound according to any one of [1] to [4], wherein R^{F} is each independently at each occurrence a group represented by the following formula (f1), (f2), (f3), (f4), or (f5) :

   - (OC₃F₆)_{d}-(OC₂F₄)ₑ- (f1)

   wherein d is an integer of 1 to 200, and e is 0 or 1;

   - (OC₄F₈)_{c}-(OC₃F₆)_{d}-(OC₂F₄)ₑ-(OCF₂)_{f}- (f2)

   wherein c and d are each independently an integer of 0 to 30,
   e and f are each independently an integer of 1 to 200,
   the sum of c, d, e, and f is an integer of 10 to 200, and
   the occurrence order of the respective repeating units enclosed in parentheses' provided with a subscript c, d, e, or f is not limited in the formula;

      - (R⁶-R⁷)_{g}- (f3)

      wherein R⁶ is OCF₂ or OC₂F₄,
   R⁷ is a group selected from OC₂F₄, OC₃F₆, OC₄F₈, OC₅F₁₀, and OC₆F₁₂, or a combination of two or three groups selected from these groups, and
   g is an integer of 2 to 100;

      -(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)

      wherein e is an integer of 1 or more and 200 or less, a, b, c, d, and f are each independently an integer of 0 or more and 200 or less, the sum of a, b, c, d, e, and f is at least 1, and the occurrence order of the respective repeating units enclosed in parentheses provided with a, b, c, d, e, or f is not limited in the formula; and

      -(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)

      wherein f is an integer of 1 or more and 200 or less, a, b, c, d, and e are each independently an integer of 0 or more and 200 or less, the sum of a, b, c, d, e, and f is at least 1, and the occurrence order of the respective repeating units enclosed in parentheses provided with a, b, c, d, e, or f is not limited in the formula.
[6] The fluoropolyether group-containing silane compound according to any one of [1] to [5], wherein R⁵ is a hydrogen atom.
[7] The fluoropolyether group-containing silane compound according to any one of [1] to [4], wherein R⁵ is R^{Si}.
[8] The fluoropolyether group-containing silane compound according to any one of [1] to [7], wherein R^{Si} is each independently a group represented by the following formula (S1), (S2), (S3), (S4), or (S5):

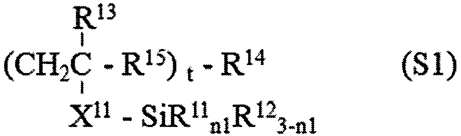

   - SiR¹¹ₙ₁R¹²₃₋ₙ₁ (S2)

   - SiR^{a1}ₖ₁R^{bl1}₁₁R^{c1}ₘ₁ (S3)

   - CR^{d1}ₖ₂R^{e1}₁₂R^{f1}ₘ₂ (S4)

   - NR^{g1}R^{h1} (S5)

   wherein
   R¹¹ is each independently at each occurrence a hydroxyl group or a hydrolyzable group;
   R¹² is each independently at each occurrence a hydrogen atom or a monovalent organic group;
   n1 is each independently an integer of 0 to 3 for each (SiR¹¹ₙ₁R¹²₃₋ₙ₁) unit;
   X¹¹ is each independently at each occurrence a single bond or a divalent organic group;
   R¹³ is each independently at each occurrence a hydrogen atom or a monovalent organic group;
   t is each independently at each occurrence an integer of 2 or more;
   R¹⁴ is each independently at each occurrence a hydrogen atom, a halogen atom, or -X¹¹-SiR¹¹ₙ₁R¹²₃₋ₙ₁;
   R¹⁵ is each independently at each occurrence a single bond, an oxygen atom, an alkylene group having 1 to 6 carbon atoms, or an alkyleneoxy group having 1 to 6 carbon atoms;
   R^{a1} is each independently at each occurrence -Z¹-SiR²¹ₚ₁R²²_{q1}R²³ᵣ₁;
   Z¹ is each independently at each occurrence an oxygen atom or a divalent organic group;
   R²¹ is each independently at each occurrence -Z^{1'}-SiR^{21'}_{p1'}R^{22'}_{q1'}R^{23'}_{r1'} ;
   R²² is each independently at each occurrence a hydroxyl group or a hydrolyzable group;
   R²³ is each independently at each occurrence a hydrogen atom or a monovalent organic group;
   p1 is each independently at each occurrence an integer of 0 to 3;
   q1 is each independently at each occurrence an integer of 0 to 3;
   r1 is each independently at each occurrence an integer of 0 to 3;
   the sum of p1, q1, and r1 is 3;
   Z^{1'} is each independently at each occurrence an oxygen atom or a divalent organic group;
   R^{21'} is each independently at each occurrence -Z^{1"}-SiR^{22"}_{q1"}R^{23"}_{r1"};
   R^{22'} is each independently at each occurrence a hydroxyl group or a hydrolyzable group;
   R^{23'} is each independently at each occurrence a hydrogen atom or a monovalent organic group;
   p1' is each independently at each occurrence an integer of 0 to 3;
   q1' is each independently at each occurrence an integer of 0 to 3;
   r1' is each independently at each occurrence an integer of 0 to 3;
   the sum of p1', q1', and r1' is 3;
   Z^{1"} is each independently at each occurrence an oxygen atom or a divalent organic group;
   R^{22"} is each independently at each occurrence a hydroxyl group or a hydrolyzable group;
   R^{23"} is each independently at each occurrence a hydrogen atom or a monovalent organic group;
   q1" is each independently at each occurrence an integer of 0 to 3;
   r1" is each independently at each occurrence an integer of 0 to 3;
   the sum of q1" and r1" is 3;
   R^{b1} is each independently at each occurrence a hydroxyl group or a hydrolyzable group;
   R^{c1} is each independently at each occurrence a hydrogen atom or a monovalent organic group;
   k1 is each independently at each occurrence an integer of 1 to 3;
   11 is each independently at each occurrence an integer of 0 to 3;
   m1 is each independently at each occurrence an integer of 0 to 3;
   the sum of k1, 11, and m1 is 3;
   R^{d1} is each independently at each occurrence -Z²-CR³¹ₚ₂R³²_{q2}R³³ᵣ₂ ;
   Z² is each independently at each occurrence a single bond, an oxygen atom, or a divalent organic group;
   R³¹ is each independently at each occurrence -Z^{2'}-CR^{32'}_{q2'}R^{33'}_{r2'};
   R³² is each independently at each occurrence -Z³-SiR³⁴ₙ₂R³⁵₃₋ₙ₂ ;
   R³³ is each independently at each occurrence a hydrogen atom, a hydroxyl group, or a monovalent organic group;
   p2 is each independently at each occurrence an integer of 0 to 3;
   q2 is each independently at each occurrence an integer of 0 to 3;
   r2 is each independently at each occurrence an integer of 0 to 3;
   the sum of p2, q2, and r2 is 3;
   Z^{2'} is each independently at each occurrence a single bond, an oxygen atom, or a divalent organic group;
   R^{32'} is each independently at each occurrence -Z³-SiR³⁴ₙ₂R³⁵₃₋ₙ₂ ;
   R^{33'} is each independently at each occurrence a hydrogen atom, a hydroxyl group, or a monovalent organic group;
   q2' is each independently at each occurrence an integer of 0 to 3;
   r2' is each independently at each occurrence an integer of 0 to 3;
   the sum of q2' and r2' is 3;
   Z³ is each independently at each occurrence a single bond, an oxygen atom, or a divalent organic group;
   R³⁴ is each independently at each occurrence a hydroxyl group or a hydrolyzable group;
   R³⁵ is each independently at each occurrence a hydrogen atom or a monovalent organic group;
   n2 is each independently at each occurrence an integer of 0 to 3;
   R^{e1} is each independently at each occurrence -Z³-SiR³⁴ₙ₂R³⁵₃₋ₙ₂ ;
   R^{f1} is each independently at each occurrence a hydrogen atom, a hydroxyl group, or a monovalent organic group;
   k2 is each independently at each occurrence an integer of 0 to 3;
   12 is each independently at each occurrence an integer of 0 to 3;
   m2 is each independently at each occurrence an integer of 0 to 3;
   the sum of k2, 12, and m2 is 3;
   R^{g1} and R^{h1} are each independently at each occurrence - Z⁴-SiR¹¹ₙ₁R¹²₃₋ₙ₁, -Z⁴-SiR^{a1}ₖ₁R^{b1}₁₁R^{c1}ₘ₁, or -Z⁴-CR^{d1}ₖ₂R^{e1}₁₂R^{f1}ₘ₂; and
   Z⁴ is each independently at each occurrence a single bond, an oxygen atom, or a divalent organic group;
   provided that in the formulae (S1), (S2), (S3), (S4), and (S5), there is at least one Si atom to which a hydroxyl group or a hydrolyzable group is bonded.
[9] The fluoropolyether group-containing silane compound according to [8], wherein R^{Si} bonded to X^{B} is a group represented by the formula (S3) or (S4).
[10] The fluoropolyether group-containing silane compound according to [8] or [9], wherein R^{Si} in R¹ is a group represented by the formula (S2).
[11] The fluoropolyether group-containing silane compound according to any one of [1] to [10], wherein X^{A} is each independently a single bond or a group represented by the following formula:

   - (R^{51'})_{p5'}-(X^{51'})_{q5'}-(R^{51'})_{p5"}-

   wherein
   R^{51'} is each independently a C₁₋₆ alkylene group,
   X^{51'} is O,
   p5' is 0 or 1,
   p5" is 0 or 1, and
   q5' is 0 or 1,
   provided that at least one of p5' and p5" is 1; and
   X^{B} is each independently a single bond or a group represented by the following formula:

      - (R^{61'})_{p6'}-(X^{61'})_{q6'}-(R^{61'})_{p6"}-

      wherein
   R^{61'} is each independently a C₁₋₆ alkylene group,
   X^{61'} is O,
   p6' is 0 or 1,
   p6" is 0 or 1, and
   q6' is 0 or 1,
   provided that at least one of p6' and p6" is 1.
[12] The fluoropolyether group-containing silane compound according to any one of [1] to [11], wherein X^{A} is a single bond, and X^{B} is a C₁₋₆ alkylene group.
[13] A surface-treating agent comprising the fluoropolyether group-containing silane compound according to any one of [1] to [12].
[14] The surface-treating agent according to [13], further comprising one or more other components selected from a fluorine-containing oil, a silicone oil, and a catalyst.
[15] The surface-treating agent according to [13] or [14], further comprising a solvent.
[16] The surface-treating agent according to any one of [13] to [15], which is used as an antifouling coating agent or a water-proof coating agent.
[17] An article comprising a substrate and a layer on a surface of the substrate, wherein the layer is formed of the fluoropolyether group-containing silane compound according to any one of [1] to [12] or the surface-treating agent according to any one of [13] to [16].
[18] The article according to [17], which is an optical member.

### Advantageous Effect of Invention

The present disclosure can provide a surface-treating agent capable of providing a surface-treating layer having higher friction durability.

### Description of Embodiments

The term "monovalent organic group", as used herein, refers to a monovalent group containing carbon. The monovalent organic group is not limited, and may be a hydrocarbon group or a derivative thereof. The derivative of the hydrocarbon group refers to a group that has one or more of N, O, S, Si, amide, sulfonyl, siloxane, carbonyl, carbonyloxy, and the like at the terminal or in the molecular chain of the hydrocarbon group. The term simply referred to as an "organic group" means a monovalent organic group. The term "divalent organic group" refers to a divalent group containing carbon. The divalent organic group may be, but is not limited to, a divalent group obtained by further removing one hydrogen atom from an organic group.

The term "hydrocarbon group", as used herein, refers to a group that contains carbon and hydrogen and that is obtained by removing one hydrogen atom from a hydrocarbon. The hydrocarbon group is not limited, and examples include a C₁₋₂₀ hydrocarbon group optionally substituted with one or more substituents, such as an aliphatic hydrocarbon group and an aromatic hydrocarbon group. The "aliphatic hydrocarbon group" may be either linear, branched, or cyclic, and may be either saturated or unsaturated. The hydrocarbon group may contain one or more ring structures.

The substituent of the "hydrocarbon group", as used herein, is not limited, and examples include one or more groups selected from a halogen atom, and a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group, and a 5 to 10-membered heteroaryl group each optionally substituted with one or more halogen atoms.

The "hydrolyzable group", as used herein, refers to a group capable of undergoing a hydrolysis reaction, i.e., refers to a group that can be eliminated from the main backbone of a compound by a hydrolysis reaction. Examples of the hydrolyzable group include -OR^{j}, -OCOR^{j}, -O-N=CR^{j}₂, - NR^{j}₂, -NHR^{j}, -NCO, and halogen (in these formulae, R^{j} represents a substituted or unsubstituted C₁₋₄ alkyl group).

### (Fluoropolyether group-containing silane compound)

The fluoropolyether group-containing silane compound of the present disclosure is a fluoropolyether group-containing silane compound represented by the following formula (1) or (2) : 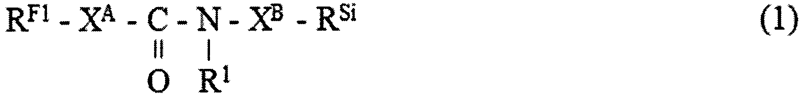 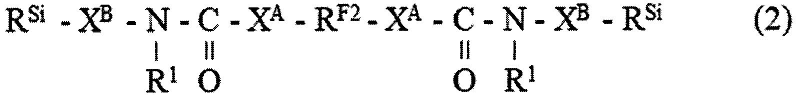 wherein
R^{F1} is Rf¹-R^{F}-O_{q}-;
R^{F2} is -Rf²ₚ-R^{F}-O_{q}-;
Rf¹ is a C₁₋₁₆ alkyl group optionally substituted with one or more fluorine atoms;
Rf² is a C₁₋₆ alkylene group optionally substituted with one or more fluorine atoms;
R^{F} is each independently a divalent fluoropolyether group;
p is 0 or 1;
q is each independently at each occurrence 0 or 1;
R¹ is each independently -R³-(OR²)ₘ-Oₙ-R⁴-R⁵;
R² is each independently at each occurrence a C₁₋₆ alkylene group;
m is an integer of 2 to 10;
n is 0 or 1;
R³ is a single bond or a C₁₋₆ alkylene group;
R⁴ is a single bond or a C₁₋₆ alkylene group;
R⁵ is a hydrogen atom or R^{Si};
R^{Si} is each independently a monovalent group containing a Si atom to which a hydroxyl group or a hydrolyzable group is bonded;
X^{A} is each independently a single bond or a group represented by the following formula:

   - (X⁵¹)ₚ₅-

   wherein
X⁵¹ is each independently at each occurrence a group selected from the group consisting of -O-, -S-, an o-, m- or p-phenylene group, -C(O)O-, -OC(O)-, -Si(R⁵³)₂-, - (Si(R⁵³)₂O)ₘ₅-Si(R⁵³)₂-, -CONR⁵⁴-, -NR⁵⁴CO-, -O-CONR⁵⁴-, -NR⁵⁴COO-, -NR⁵⁴-, and - (CH₂)ₙ₅-,
R⁵³ is each independently at each occurrence a phenyl group, a C₁₋₆ alkyl group, or a C₁₋₆ alkoxy group,
R⁵⁴ is each independently at each occurrence a hydrogen atom, a phenyl group, or a C₁₋₆ alkyl group,
m5 is each independently at each occurrence an integer of 1 to 100,
n5 is each independently at each occurrence an integer of 1 to 20, and
p5 is an integer of 1 to 10; and
X^{B} is each independently a single bond or a group represented by the following formula:

   - (X⁶¹)ₚ₆-

   wherein
X⁶¹ is each independently at each occurrence a group selected from the group consisting of -O-, -S-, an o-, m- or p-phenylene group, -C(O)O-, -OC(O)-, -Si(R⁶³)₂-, - (Si(R⁶³)₂O)ₘ₆-Si(R⁶³)₂-, -CONR⁶⁴-, -NR⁶⁴CO-, -O-CONR⁶⁴-, -NR⁶⁴COO-, -NR⁶⁴-, and -(CH₂)ₙ₆-,
R⁶³ is each independently at each occurrence a phenyl group, a C₁₋₆ alkyl group, or a C₁₋₆ alkoxy group,
R⁶⁴ is each independently at each occurrence a hydrogen atom, a phenyl group, or a C₁₋₆ alkyl group,
m6 is each independently at each occurrence an integer of 1 to 100,
n6 is each independently at each occurrence an integer of 1 to 20, and
p6 is an integer of 1 to 10.

In the formula (1), R^{F1} is Rf¹-R^{F}-O_{q}-.

In the formula (2), R^{F2} is -Rf²ₚ-R^{F}-O_{q}-.

In the formula, Rf¹ is a C₁₋₁₆ alkyl group optionally substituted with one or more fluorine atoms.

In the C₁₋₁₆ alkyl group optionally substituted with one or more fluorine atoms, the "C₁₋₁₆ alkyl group" may be linear or branched, and is preferably a linear or branched C₁₋₆ alkyl group, in particular C₁₋₃ alkyl group, and more preferably a linear C₁₋₆ alkyl group, in particular C₁₋₃ alkyl group.

The Rf¹ is preferably a C₁₋₁₆ alkyl group substituted with one or more fluorine atoms, more preferably a CF₂H-C₁₋₁₅ perfluoroalkylene group, and even more preferably a C₁₋₁₆ perfluoroalkyl group.

The C₁₋₁₆ perfluoroalkyl group may be linear or branched, and is preferably a linear or branched C₁₋₆ perfluoroalkyl group, in particular C₁₋₃ perfluoroalkyl group, more preferably a linear C₁₋₆ perfluoroalkyl group, in particular C₁₋₃ perfluoroalkyl group, and specifically -CF₃, -CF₂CF₃, or -CF₂CF₂CF₃.

In the formula, Rf² is a C₁₋₆ alkylene group optionally substituted with one or more fluorine atoms.

In the C₁₋₆ alkylene group optionally substituted with one or more fluorine atoms, the "C₁₋₆ alkylene group" may be linear or branched, and is preferably a linear or branched C₁₋₃ alkylene group, and more preferably a linear C₁₋₃ alkylene group.

The Rf² is preferably a C₁₋₆ alkylene group substituted with one or more fluorine atoms, more preferably a C₁₋₆ perfluoroalkylene group, and even more preferably a C₁₋₃ perfluoroalkylene group.

The C₁₋₆ perfluoroalkylene group may be linear or branched, and is preferably a linear or branched C₁₋₃ perfluoroalkylene group, more preferably a linear C₁₋₃ perfluoroalkylene group, and specifically -CF₂-, -CF₂CF₂-, or -CF₂CF₂CF₂-.

In the formulae, p is 0 or 1. In one embodiment, p is 0. In another embodiment, p is 1.

In the formulae, q is each independently 0 or 1. In one embodiment, q is 0. In another embodiment, q is 1.

In the formulae (1) and (2), R^{F} is each independently at each occurrence a divalent fluoropolyether group.

R^{F} is preferably a group represented by the following formula:

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein
R^{Fa} is each independently at each occurrence a hydrogen atom, a fluorine atom, or a chlorine atom;
a, b, c, d, e, and f are each independently an integer of 0 to 200; the sum of a, b, c, d, e, and f is 1 or more; and the occurrence order of the respective repeating units enclosed in parentheses provided with a, b, c, d, e, or f is not limited in the formula; provided that when all R^{Fa} groups are hydrogen atoms or chlorine atoms, at least one of a, b, c, e, and f is 1 or more.

R^{Fa} is preferably a hydrogen atom or a fluorine atom, and more preferably a fluorine atom. However, when all R^{Fa} groups are hydrogen atoms or chlorine atoms, at least one of a, b, c, e, and f is 1 or more.

Preferably, a, b, c, d, e, and f may be each independently an integer of 0 to 100.

The sum of a, b, c, d, e, and f is preferably 5 or more, and more preferably 10 or more, and may be, for example, 15 or more or 20 or more. The sum of a, b, c, d, e, and f is preferably 200 or less, more preferably 100 or less, and even more preferably 60 or less, and may be, for example, 50 or less or 30 or less.

These repeating units may be linear or branched. For example, -(OC₆F₁₂)- may be - (OCF₂CF₂CF₂CF₂CF₂CF₂) -, - (OCF(CF₃)CF₂CF₂CF₂CF₂) -, - (OCF₂CF(CF₃)CF₂CF₂CF₂)-, - (OCF₂CF₂CF(CF₃)CF₂CF₂)-, - (OCF₂CF₂CF₂CF(CF₃)CF₂)-, - (OCF₂CF₂CF₂CF₂CF(CF₃))-, or the like. -(OC₅F₁₀)- may be - (OCF₂CF₂CF₂CF₂CF₂)-, - (OCF (CF₃)CF₂CF₂CF₂)-, - (OCF₂CF(CF₃)CF₂CF₂)-, - (OCF₂CF₂CF(CF₃)CF₂)-, - (OCF₂CF₂CF₂CF(CF₃))-, or the like. -(OC4F₈)- may be any of - (OCF₂CF₂CF₂CF₂)-, - (OCF (CF₃)CF₂CF₂)-, - (OCF₂CF(CF₃)CF₂)-, - (OCF₂CF₂CF(CF₃))-, - (OC(CF₃)₂CF₂) -, - (OCF₂C(CF₃)₂)-, - (OCF(CF₃)CF(CF₃))-, -(OCF(C₂F₅)CF₂)-, and -(OCF₂CF(C₂F₅)) -. - (OC₃F₆)- (i.e., in the formula, R^{Fa} is a fluorine atom) may be any of -(OCF₂CF₂CF₂)-, -(OCF(CF₃)CF₂)-, and - (OCF₂CF(CF₃))-. -(OC₂F₄)- may be any of -(OCF₂CF₂)- and -(OCF(CF₃))-.

In one embodiment, the repeating unit is linear. When the repeating unit is linear, the surface lubricity, friction durability, and the like of the surface-treating layer can be increased.

In one embodiment, the repeating unit is branched. When the repeating unit is branched, the dynamic friction coefficient of the surface-treating layer can be increased.

In one embodiment, R^{F} is each independently at each occurrence a group represented by any of the following formulae (f1) to (f5):

-(OC₃F₆)_{d}-(OC₂F₄)ₑ- (f1)

wherein d is an integer of 1 to 200, and e is 0 or 1;

- (OC₄F₈)_{c}-(OC₃F₆)_{d}-(OC₂F₄)ₑ-(OCF₂)_{f}- (f2)

wherein c and d are each independently an integer of 0 or more and 30 or less, e and f are each independently an integer of 1 or more and 200 or less,
the sum of c, d, e, and f is 2 or more, and
the occurrence order of the respective repeating units enclosed in parentheses provided with a subscript c, d, e, or f is not limited in the formula;

   - (R⁶-R⁷)_{g}- (f3)

   wherein R⁶ is OCF₂ or OC₂F₄,
R⁷ is a group selected from OC₂F₄, OC₃F₆, OC₄F₈, OC₅F₁₀, and OC₆F₁₂, or a combination of two or three groups independently selected from these groups, and
g is an integer of 2 to 100;

   - (OC₆F₁₂)ₐ-(OC₅F₁₀)_{b}-(OC₄F₈)_{c}-(OC₃F₆)_{d}-(OC₂F₄)ₑ-(OCF₂)_{f}- (f4)

   where e is an integer of 1 or more and 200 or less, a, b, c, d, and f are each independently an integer of 0 or more and 200 or less, and the occurrence order of the respective repeating units enclosed in parentheses provided with a, b, c, d, e, or f is not limited in the formula; and

   - (OC₆F₁₂)ₐ-(OC₅F₁₀)_{b}-(OC₄F₈)_{c}-(OC₃F₆)_{d}-(OC₂F₄)ₑ-(OCF₂)_{f}- (f5)

   where f is an integer of 1 or more and 200 or less, a, b, c, d, and e are each independently an integer of 0 or more and 200 or less, and the occurrence order of the respective repeating units enclosed in parentheses provided with a, b, c, d, e, or f is not limited in the formula.

In the formula (f1), d is preferably 5 to 200, more preferably 10 to 100, and even more preferably 15 to 50, and is, for example, an integer of 25 to 35. In one embodiment, e is 1. In another embodiment, e is 0. OC₃F₆ in the formula (f1) is preferably OCF₂CF₂CF₂, OCF₂CF(CF₃), or OCF(CF₃)CF₂, and more preferably OCF₂CF₂CF₂.

In the formula (f2), e and f are each independently an integer of preferably 5 to 200, and more preferably 10 to 200. The sum of c, d, e, and f is preferably 5 or more, and more preferably 10 or more, and may be, for example, 15 or more or 20 or more. In one embodiment, the formula (f2) is preferably a group represented by - (OCF₂CF₂CF₂CF₂)_{c}-(OCF₂CF₂CF₂)_{d}-(OCF₂CF₂)ₑ-(OCF₂)_{f}-. In another embodiment, the formula (f2) may be a group represented by - (OC₂F₄)ₑ-(OCF₂)_{f}-.

In the formula (f3), R⁶ is preferably OC₂F₄. In the formula (f3), R⁷ is preferably a group selected from OC₂F₄, OC₃F₆, and OC₄F₈, or a combination of two or three groups independently selected from these groups, and is more preferably a group selected from OC₃F₆ and OC₄F₈. Examples of the combination of two or three groups independently selected from OC₂F₄, OC₃F₆, and OC₄F₈ include, but are not limited to, -OC₂F₄OC₃F₆-, -OC₂F₄OC₄F₈-, -OC₃F₆OC₂F₄-, - OC₃F₆OC₃F₆-, -OC₃F₆OC₄F₈-, -OC₄F₈OC₄F₈-, -OC₄F₈OC₃F₆-, - OC₄F₈OC₂F₄-, -OC₂F₄OC₂F₄OC₃F₆-, -OC₂F₄OC₂F₄OC₄F₈-, - OC₂F₄OC₃F₆OC₂F₄-, -OC₂F₄OC₃F₆OC₃F₆-, -OC₂F₄OC₄F₈OC₂F₄-, - OC₃F₆OC₂F₄OC₂F₄-, -OC₃F₆OC₂F₄OC₃F₆-, -OC₃F₆OC₃F₆OC₂F₄-, and - OC₄F₈OC₂F₄OC₂F₄-. In the formula (f3), g is an integer of preferably 3 or more, and more preferably 5 or more. g is preferably an integer of 50 or less. In the formula (f3), OC₂F₄, OC₃F₆, OC₄F₈, OC₅F₁₀, and OC₆F₁₂ may be either linear or branched, and are preferably linear. In this embodiment, the formula (f3) is preferably - (OC₂F₄-OC₃F₆)_{g}- or - (OC₂F₄-OC₄F₈)_{g}-.

In the formula (f4), e is an integer of preferably 1 or more and 100 or less, and more preferably 5 or more and 100 or less. The sum of a, b, c, d, e, and f is preferably 5 or more, and more preferably 10 or more, and is, for example, 10 or more and 100 or less.

In the formula (f5), f is an integer of preferably 1 or more and 100 or less, and more preferably 5 or more and 100 or less. The sum of a, b, c, d, e, and f is preferably 5 or more, and more preferably 10 or more, and is, for example, 10 or more and 100 or less.

In one embodiment, R^{F} is a group represented by the formula (f1).

In one embodiment, R^{F} is a group represented by the formula (f2).

In one embodiment, R^{F} is a group represented by the formula (f3).

In one embodiment, R^{F} is a group represented by the formula (f4).

In one embodiment, R^{F} is a group represented by the formula (f5).

In R^{F}, the ratio of e to f (hereinafter, referred to as an "e/f ratio") is 0.1 to 10, preferably 0.2 to 5, more preferably 0.2 to 2, even more preferably 0.2 to 1.5, and yet more preferably 0.2 to 0.85. With an e/f ratio of 10 or less, the lubricity, friction durability, and chemical resistance (such as durability against artificial sweat) of a surface-treating layer obtained from the compound are further increased. The lower the e/f ratio is, the more increased the lubricity and friction durability of the surface-treating layer is. On the other hand, with an e/f ratio of 0.1 or more, the stability of the compound can be further increased. The higher the e/f ratio is, the greater the stability of the compound is.

In one embodiment, the e/f ratio is preferably 0.2 to 0.95, and more preferably 0.2 to 0.9.

In one embodiment, from the viewpoint of heat resistance, the e/f ratio is preferably 1.0 or more, and more preferably 1.0 to 2.0.

In the fluoropolyether group-containing silane compound, the number average molecular weight of the R^{F1} and R^{F2} moieties is, but is not limited to, for example, 500 to 30,000, preferably 1,500 to 30,000, and more preferably 2,000 to 10,000. Herein, the number average molecular weight of R^{F1} and R^{F2} is a value obtained by ¹⁹F-NMR measurement.

In another embodiment, the number average molecular weight of the R^{F1} and R^{F2} moieties is 500 to 30,000, preferably 1,000 to 20,000, more preferably 2,000 to 15,000, and even more preferably 2,000 to 10,000, and may be, for example, 3,000 to 6,000.

In another embodiment, the number average molecular weight of the R^{F1} and R^{F2} moieties may be 4,000 to 30,000, preferably 5,000 to 10,000, and more preferably 6,000 to 10,000.

In the formulae (1) and (2), R¹ is each independently - R³-(OR²²)ₘ-Oₙ-R⁴-R⁵.

In the formula, R² is each independently at each occurrence a C₁₋₆ alkylene group.

In R², the C₁₋₆ alkylene group may be linear or branched, and is preferably linear.

R² is preferably a C₁₋₄ alkylene group, more preferably a C₁₋₃ alkylene group, and particularly preferably -CH₂CH₂-. With such an R² group, friction durability can be more increased.

In the formulae, m is an integer of 2 to 10, preferably an integer of 2 to 6, and more preferably an integer of 2 to 4. With m being within the above range, friction durability can be more increased.

In the formulae, R³ is a single bond or a C₁₋₆ alkylene group.

In R³, the C₁₋₆ alkylene group may be linear or branched, and is preferably linear.

R³ is preferably a C₁₋₆ alkylene group, more preferably a C₁₋₃ alkylene group, and particularly preferably a methylene group.

In the formula, R⁴ is a single bond or a C₁₋₆ alkylene group.

In R⁴, the C₁₋₆ alkylene group may be linear or branched, and is preferably linear.

R⁴ is preferably a C₁₋₆ alkylene group, more preferably a C₁₋₃ alkylene group, and particularly preferably a methylene group.

In the formula, n is 0 or 1.

In one embodiment, n is 0.

In another embodiment, n is 1.

In the formula, R⁵ is a hydrogen atom or R^{Si}. R^{Si} may be the same as or different from R^{Si} bonded to X^{B}.

In one embodiment, R^{Si} in R¹ is the same as R^{Si} bonded to X^{B}.

In another embodiment, R^{Si} in R¹ is different from R^{Si} bonded to X^{B}.

In one embodiment, R⁵ is a hydrogen atom.

In another embodiment, R⁵ is R^{Si}.

In the formulae (1) and (2), R^{Si} is each independently at each occurrence a monovalent group containing a Si atom to which a hydroxyl group or a hydrolyzable group is bonded.

In a preferable embodiment, R^{Si} is a group represented by the following formula (S1), (S2), (S3), (S4), or (S5):

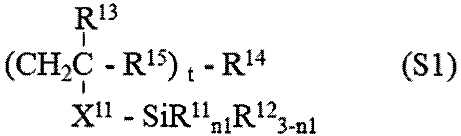

- SiR¹¹ₙ₁R¹²₃₋ₙ₁ (S2)

- SiR^{a1}ₖ₁R^{b1}₁₁R^{c1}ₘ₁ (S3)

-CR^{d1}ₖ₂R^{e1}₁₂R^{f1}ₘ₂ (S4)

-NR^{g1}R^{h1} (S5)

In the formulae, R¹¹ is each independently at each occurrence a hydroxyl group or a hydrolyzable group.

Preferably, R¹¹ is each independently at each occurrence a hydrolyzable group.

Preferably, R¹¹ is each independently at each occurrence -OR^{j}, -OCOR^{j}, -O-N=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (i.e., an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{j} is a methyl group, and in another embodiment, R^{j} is an ethyl group.

In the formulae, R¹² is each independently at each occurrence a hydrogen atom or a monovalent organic group. The monovalent organic group is a monovalent organic group excluding the hydrolyzable group.

In R¹², the monovalent organic group is preferably a C₁₋₂₀ alkyl group, more preferably a C₁₋₆ alkyl group, and even more preferably a methyl group.

In the formulae, n1 is each independently an integer of 0 to 3 for each (SiR¹¹ₙ₁R¹²₃₋ₙ₁) unit. However, when R^{Si} is a group represented by the formula (S1) or (S2), the R^{Si} moiety at the terminal of the formulae (1) and (2) (hereinafter, also referred to simply as a "terminal moiety" of the formulae (1) and (2)) has at least one (SiR¹¹ₙ₁R¹²₃₋ₙ₁) unit wherein n1 is 1 to 3. That is, in such terminal moieties, not all n1 are 0 at the same time. In other words, in the terminal moieties of the formula (1) and the formula (2), at least one Si atom to which a hydroxyl group or a hydrolyzable group is bonded is present.

n1 is each independently an integer of preferably 1 to 3, more preferably 2 to 3, and even more preferably 3 for each (SiR¹¹ₙ₁R¹²₃₋ₙ₁) unit.

In the formulae, X¹¹ is each independently at each occurrence a single bond or a divalent organic group. The divalent organic group is preferably -R²⁸-Oₓ-R²⁹-, wherein R²⁸ and R²⁹ are each independently at each occurrence a single bond or a C₁₋₂₀ alkylene group, and x is 0 or 1. The C₁₋₂₀ alkylene group may be linear or branched, and is preferably linear. The C₁₋₂₀ alkylene group is preferably a C₁₋₁₀ alkylene group, more preferably a C₁₋₆ alkylene group, and even more preferably a C₁₋₃ alkylene group.

In one embodiment, X¹¹ is each independently at each occurrence -C₁₋₆ alkylene-O-C₁₋₆ alkylene- or -O-C₁₋₆ alkylene-.

In a preferable embodiment, X¹¹ is each independently at each occurrence a single bond or a linear C₁₋₆ alkylene group, preferably a single bond or a linear C₁₋₃ alkylene group, more preferably a single bond or a linear C₁₋₂ alkylene group, and even more preferably a linear C₁₋₂ alkylene group.

In the formulae, R¹³ is each independently at each occurrence a hydrogen atom or a monovalent organic group. Such a monovalent organic group is preferably a C₁₋₂₀ alkyl group. Such a C₁₋₂₀ alkyl group may be linear or branched, and is preferably linear.

In a preferable embodiment, R¹³ is each independently at each occurrence a hydrogen atom or a linear C₁₋₆ alkyl group, preferably a hydrogen atom or a linear C₁₋₃ alkyl group, and preferably a hydrogen atom or a methyl group.

In the formulae, t is each independently at each occurrence an integer of 2 or more.

In a preferable embodiment, t is each independently at each occurrence an integer of 2 to 10, and preferably an integer of 2 to 6.

In the formulae, R¹⁴ is each independently at each occurrence a hydrogen atom, a halogen atom, or -X¹¹-SiR¹¹ₙ₁R¹²₃-ₙ₁. The halogen atom is preferably an iodine atom, a chlorine atom, or a fluorine atom, and more preferably a fluorine atom. In a preferable embodiment, R¹⁴ is a hydrogen atom.

In the formulae, R¹⁵ is each independently at each occurrence a single bond, an oxygen atom, an alkylene group having 1 to 6 carbon atoms, or an alkyleneoxy group having 1 to 6 carbon atoms.

In one embodiment, R¹⁵ is each independently at each occurrence an oxygen atom, an alkylene group having 1 to 6 carbon atoms, or an alkyleneoxy group having 1 to 6 carbon atoms.

In a preferable embodiment, R¹⁵ is a single bond.

In one embodiment, the formula (S1) is the following formula (S1-a): 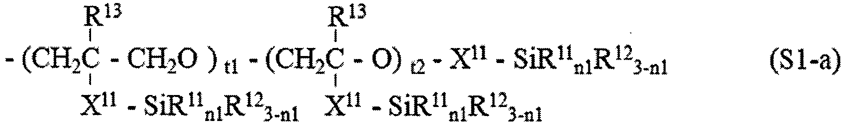 wherein
R¹¹, R¹², R¹³, X¹¹, and n1 have the same meanings as those described for the formula (S1);
t1 and t2 are each independently at each occurrence an integer of 1 or more, preferably an integer of 1 to 10, and more preferably an integer of 2 to 10, such as an integer of 1 to 5 or an integer of 2 to 5; and
the occurrence order of the respective repeating units enclosed in parentheses provided with t1 and t2 is not limited in the formula.

In a preferable embodiment, the formula (S1) is the following formula (S1-b): 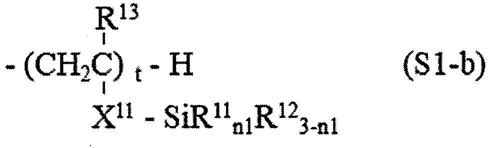 wherein R¹¹, R¹², R¹³, X¹¹, n1, and t have the same meanings as those described for the formula (S1).

In the formulae, R^{a1} is each independently at each occurrence -Z¹-SiR²¹ₚ₁R²²_{q1}R²³ᵣ₁.

Z¹ is each independently at each occurrence an oxygen atom or a divalent organic group. The right side of the structure denoted as Z¹ below binds to (SiR²¹ₚ₁R²²_{q1}R²³ᵣ₁).

In a preferable embodiment, Z¹ is a divalent organic group.

In a preferable embodiment, Z¹ is not a group that forms a siloxane bond with the Si atom to which Z¹ binds. Preferably, in the formula (S3), (Si-Z¹-Si) does not contain a siloxane bond.

Z¹ is preferably a C₁₋₆ alkylene group, - (CH₂)_{z1}-O-(CH₂)_{z2}-(wherein z1 is an integer of 0 to 6 such as an integer of 1 to 6, and z2 is an integer of 0 to 6 such as an integer of 1 to 6), or - (CH₂)_{z3}-phenylene-(CH₂)_{z4}- (wherein z3 is an integer of 0 to 6 such as an integer of 1 to 6, and z4 is an integer of 0 to 6 such as an integer of 1 to 6). Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z¹ is a C₁₋₆ alkylene group or - (CH₂)_{z3}-phenylene-(CH₂)_{z4}-, and preferably -phenylene-(CH₂)_{z4}-. When Z¹ is such a group, light resistance, in particular ultraviolet resistance, can be more increased.

In another preferable embodiment, Z¹ is a C₁₋₃ alkylene group. In one embodiment, Z¹ may be -CH₂CH₂CH₂-. In another embodiment, Z¹ may be -CH₂CH₂-.

R²¹ is each independently at each occurrence -Z^{1'}-SiR^{21'}ₚ₁R^{22'}_{q1'}R^{23'}_{r1'} .

Z^{1'} is each independently at each occurrence an oxygen atom or a divalent organic group. The right side of the structure denoted as Z^{1'} below binds to (SiR^{21'}_{p1'}R^{22'}_{q1'}R^{23'}_{r1'}).

In a preferable embodiment, Z^{1'} is a divalent organic group.

In a preferable embodiment, Z^{1'} is not a group that forms a siloxane bond with the Si atom to which Z^{1'} binds. Preferably, in the formula (S3), (Si-Z^{1'}-Si) does not contain a siloxane bond.

Z^{1'} is preferably a C₁₋₆ alkylene group, -(CH₂)_{z1'}-O-(CH₂)_{z2'}- (wherein z1' is an integer of 0 to 6 such as an integer of 1 to 6, and z2' is an integer of 0 to 6 such as an integer of 1 to 6), or - (CH₂)_{z3'}-phenylene-(CH₂)_{z4'}-(wherein z3' is an integer of 0 to 6 such as an integer of 1 to 6, z4' is an integer of 0 to 6 such as an integer of 1 to 6). Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z^{1'} is a C₁₋₆ alkylene group or - (CH₂)_{z3'}-phenylene-(CH₂)_{z4}-, and preferably -phenylene-(CH₂)_{z4'}-. When Z^{1'} is such a group, light resistance, in particular ultraviolet resistance, can be further increased.

In another preferable embodiment, Z^{1'} is a C₁₋₃ alkylene group. In one embodiment, Z^{1'} can be -CH₂CH₂CH₂-. In another embodiment, Z^{1'} can be -CH₂CH₂-.

R^{21'} is each independently at each occurrence -Z^{1"}-SiR^{22"}_{q11"}R^{23"}_{r1"} .

Z^{1"} is each independently at each occurrence an oxygen atom or a divalent organic group. The right side of the structure denoted as Z^{1"} below binds to (SiR^{22"}_{q1"}R^{23"}_{r1"}).

In a preferable embodiment, Z^{1"} is a divalent organic group.

In a preferable embodiment, Z^{1"} is not a group that forms a siloxane bond with the Si atom to which Z^{1"} binds. Preferably, in the formula (S3), (Si-Z^{1"}-Si) does not contain a siloxane bond.

Z^{1"} is preferably a C₁₋₆ alkylene group, - (CH₂)_{z1"}-O-(CH₂)_{z2"}- (wherein z1" is an integer of 0 to 6 such as an integer of 1 to 6, and z2" is an integer of 0 to 6 such as an integer of 1 to 6), or -(CH₂)_{z3"}-phenylene-(CH₂)_{z4"}-(wherein z3" is an integer of 0 to 6 such as 1 to 6, and z4" is an integer of 0 to 6 such as an integer of 1 to 6). Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z^{1"} is a C₁₋₆ alkylene group or -(CH₂)_{z3"}-phenylene-(CH₂)_{z4"}-, and preferably -phenylene-(CH₂)_{z4"}-. When Z^{1"} is such a group, light resistance, in particular ultraviolet resistance, can be more increased.

In another preferable embodiment, Z^{1"} is a C₁₋₃ alkylene group. In one embodiment, Z^{1"} may be -CH₂CH₂CH₂-. In another embodiment, Z^{1"} may be -CH₂CH₂-.

R^{22"} is each independently at each occurrence a hydroxyl group or a hydrolyzable group.

Preferably, R^{22"} is each independently at each occurrence a hydrolyzable group.

Preferably, R^{22"} is each independently at each occurrence -OR^{j}, -OCOR^{j}, -O-N=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (i.e., an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{j} is a methyl group, and in another embodiment, R^{j} is an ethyl group.

R^{23"} is each independently at each occurrence a hydrogen atom or a monovalent organic group. The monovalent organic group is a monovalent organic group excluding the hydrolyzable group.

The monovalent organic group of R^{23"} is preferably a C₁₋₂₀ alkyl group or - (CH₂)_{y1}-O-(CH₂)_{y2}-, wherein y1 is an integer of 0 to 6 such as an integer of 1 to 6, and y2 is an integer of 0 to 6 such as an integer of 1 to 6, and is more preferably a C₁₋₂₀ alkyl group. The C₁₋₂₀ alkyl group is preferably a C₁₋₆ alkyl group, and more preferably a methyl group.

q1" is each independently at each occurrence an integer of 0 to 3, and r1" is each independently at each occurrence an integer of 0 to 3. The sum of q1" and r1" is 3 in the (SiR^{22"}_{q1"}R^{23"}_{r1"}) unit.

q1" is each independently an integer of preferably 1 to 3, more preferably 2 to 3, and even more preferably 3 for each (SiR^{22"}_{q1"}R^{23"}_{r1"}) unit.

R^{22'} is each independently at each occurrence a hydroxyl group or a hydrolyzable group.

Preferably, R^{22'} is each independently at each occurrence a hydrolyzable group.

Preferably, R^{22'} is each independently at each occurrence -OR^{j}, -OCOR^{j}, -O-N=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (i.e., an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{j} is a methyl group, and in another embodiment, R^{j} is an ethyl group.

R^{23'} is each independently at each occurrence a hydrogen atom or a monovalent organic group. The monovalent organic group is a monovalent organic group excluding the hydrolyzable group.

The monovalent organic group of R^{23'} is preferably a C₁₋₂₀ alkyl group or - (CH₂)_{y3}-O-(CH₂)_{y4}-, wherein y3 is an integer of 0 to 6 such as an integer of 1 to 6, and y4 is an integer of 0 to 6 such as an integer of 1 to 6, and is more preferably a C₁₋₂₀ alkyl group. The C₁₋₂₀ alkyl group is preferably a C₁₋₆ alkyl group, and more preferably a methyl group.

p1' is each independently at each occurrence an integer 0 to 3, q1' is each independently at each occurrence an integer of 0 to 3, and r1' is each independently at each occurrence an integer of 0 to 3. The sum of p', q1', and r1' is 3 in the (SiR^{21'}_{p1'}R^{22'}_{q1'}R^{23'}_{r1'}) unit_{.}

In one embodiment, p1' is 0.

In one embodiment, p1' may be each independently an integer of 1 to 3, an integer of 2 to 3, or 3 for each (SiR^{21'}_{p1'}R^{22'}_{q1'}R^{23'}_{r1'}) unit. In a preferable embodiment, p1' is 3.

In one embodiment, q1' is each independently an integer of 1 to 3, preferably an integer of 2 to 3, and more preferably 3 for each (SiR^{21'}_{p1'}R^{22'}_{q1'}R^{23'}_{r1'}) unit.

In one embodiment, p1' is 0, and q1' is each independently an integer of 1 to 3, preferably an integer of 2 to 3, and more preferably 3 for each (SiR^{21'}_{p1'}R^{22'}_{q1'}R^{23'}_{r1'}) unit.

R²² is each independently at each occurrence a hydroxyl group or a hydrolyzable group.

Preferably, R²² is each independently at each occurrence a hydrolyzable group.

Preferably, R²² is each independently at each occurrence -OR^{j}, -OCOR^{j}, -O-N=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (i.e., an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{j} is a methyl group, and in another embodiment, R^{j} is an ethyl group.

R²³ is each independently at each occurrence a hydrogen atom or a monovalent organic group. The monovalent organic group is a monovalent organic group excluding the hydrolyzable group.

The monovalent organic group of R²³ is preferably a C₁₋₂₀ alkyl group or - (CH₂)_{y5}-O-(CH₂)_{y6}-, wherein y5 is an integer of 0 to 6 such as an integer of 1 to 6, and y6 is an integer of 0 to 6 such as an integer of 1 to 6, and is more preferably a C₁₋₂₀ alkyl group. The C₁₋₂₀ alkyl group is preferably a C₁₋₆ alkyl group, and more preferably a methyl group.

p1 is each independently at each occurrence an integer of 0 to 3, q1 is each independently at each occurrence an integer of 0 to 3, and r1 is each independently at each occurrence 0 to 3. The sum of p1, q1, and r1 is 3 in the (SiR²¹ₚ₁R²²_{q1}R²³ᵣ₁) unit.

In one embodiment, p1 is 0.

In one embodiment, p1 may be each independently an integer of 1 to 3, an integer of 2 to 3, or 3 for each (SiR²¹ₚ₁R²²_{q1}R²³ᵣ₁) unit. In a preferable embodiment, p1 is 3.

In one embodiment, q1 is each independently an integer of 1 to 3, preferably an integer of 2 to 3, and more preferably 3 for each (SiR²¹ₚ₁R²²_{q1}R²³ᵣ₁) unit.

In one embodiment, p1 is 0, and q1 is each independently an integer of 1 to 3, preferably an integer of 2 to 3, and even more preferably 3 for each (SiR²¹ₚ₁R²²_{q1}R²³ᵣ₁) unit.

In the formula, R^{b1} is each independently at each occurrence a hydroxyl group or a hydrolyzable group.

Preferably, R^{b1} is each independently at each occurrence a hydrolyzable group.

Preferably, R^{b1} is each independently at each occurrence -OR^{j}, -OCOR^{j}, -O-N=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (i.e., an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{j} is a methyl group, and in another embodiment, R^{j} is an ethyl group.

In the formula, R^{c1} is each independently at each occurrence a hydrogen atom or a monovalent organic group. The monovalent organic group is a monovalent organic group excluding the hydrolyzable group.

The monovalent organic group of R^{c1} is preferably a C₁₋₂₀ alkyl group or - (CH₂)_{y7}-O-(CH₂)_{y8}-, wherein y7 is an integer of 0 to 6 such as an integer of 1 to 6, and y8 is an integer of 0 to 6 such as an integer of 1 to 6, and is more preferably a C₁₋₂₀ alkyl group. The C₁₋₂₀ alkyl group is preferably a C₁₋₆ alkyl group, and more preferably a methyl group.

k1 is each independently at each occurrence an integer of 0 to 3, 11 is each independently at each occurrence an integer of 0 to 3, and m1 is each independently at each occurrence an integer of 0 to 3. The sum of k1, 11, and m1 is 3 in the (SiR^{a1}ₖ₁R^{b1}₁₁R^{e1}ₘ₁) unit.

In one embodiment, k1 is each independently an integer of 1 to 3, preferably 2 or 3, and more preferably 3 for each (SiR^{a1}ₖ₁R^{b1}₁₁R^{c1}ₘ₁) unit. In a preferable embodiment, k1 is 3.

In the formulae (1) and (2), when R^{Si} is a group represented by the formula (S3), preferably, at least two Si atoms to which a hydroxyl group or a hydrolyzable group is bonded are present in the terminal moieties of the formulae (1) and (2).

In a preferable embodiment, the group represented by the formula (S3) has any one of -Z¹-SiR²²_{q1}R²³ᵣ₁ (wherein q1 is an integer of 1 to 3, preferably 2 or 3, and more preferably 3, and r1 is an integer of 0 to 2), -Z^{1'}-SiR^{22'}_{q1'}R^{23'}_{r1'} (wherein q1' is an integer of 1 to 3, preferably 2 or 3, and more preferably 3, and r1' is an integer of 0 to 2), or -Z^{1"}-SiR^{22"}_{q1"}R^{23"}_{r1"} (wherein q1" is an integer of 1 to 3, preferably 2 or 3, and more preferably 3, and r1" is an integer of 0 to 2). Z¹, Z^{1'}, Z^{1"}, R²², R²³, R^{22'}, R^{23'}, R^{22"}, and R^{23"} have the same meanings as those described above.

In a preferable embodiment, when R^{21'} is present in the formula (S3), q1" is an integer of 1 to 3, preferably 2 or 3, and more preferably 3 in at least one and preferably all R^{21'} groups.

In a preferable embodiment, when R²¹ is present in the formula (S3), p1' is 0, and q1' is an integer of 1 to 3, preferably 2 or 3, and more preferably 3 in at least one and preferably all R²¹ groups.

In a preferable embodiment, when R^{a1} is present in the formula (S3), p1 is 0, and q1 is an integer of 1 to 3, preferably 2 or 3, and more preferably 3 in at least one and preferably all R^{a1} groups.

In a preferable embodiment, in the formula (S3), k1 is 2 or 3 and preferably 3, p1 is 0, q1 is 2 or 3 and preferably 3.

R^{d1} is each independently at each occurrence -Z²-CR³¹ₚ₂R³²_{q2}R³³ᵣ₂ .

Z² is each independently at each occurrence a single bond, an oxygen atom, or a divalent organic group. The right side of the structure denoted as Z² below binds to (CR³¹ₚ₂R³²_{q2}R³³ᵣ₂) .

In a preferable embodiment, Z² is a divalent organic group.

Z² is preferably a C₁₋₆ alkylene group, - (CH₂)_{z5}-O-(CH₂)_{z6}-(wherein z5 is an integer of 0 to 6 such as an integer of 1 to 6, and z6 is an integer of 0 to 6 such as an integer of 1 to 6), or - (CH₂)_{z7}-phenylene-(CH₂)_{z8}- (wherein z7 is an integer of 0 to 6 such as an integer of 1 to 6, and z8 is an integer of 0 to 6 such as an integer of 1 to 6). Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z² is a C₁₋₆ alkylene group or - (CH₂)_{z7}-phenylene-(CH₂)_{z8}-, and preferably -phenylene-(CH₂)_{z8}-. When Z² is such a group, light resistance, in particular ultraviolet resistance, can be more increased.

In another preferable embodiment, Z² is a C₁₋₃ alkylene group. In one embodiment, Z² may be -CH₂CH₂CH₂-. In another embodiment, Z² may be -CH₂CH₂-.

R³¹ is each independently at each occurrence -Z²'-CR^{32'}_{q2'}R^{33'}_{r2'}.

Z^{2'} is each independently at each occurrence a single bond, an oxygen atom, or a divalent organic group. The structure denoted as Z^{2'} below is bonded to (CR^{32'}_{q2'}R^{33'}_{r2'}) on the right side.

Z^{2'} is preferably a C₁₋₆ alkylene group, - (CH₂)_{z5'}-O-(CH₂)_{z6'}- (wherein z5' is an integer of 0 to 6 such as an integer of 1 to 6, and z6' is an integer of 0 to 6 such as an integer of 1 to 6), or - (CH₂)_{z7'}-phenylene-(CH₂)_{z8'}-(wherein z7' is an integer of 0 to 6 such as an integer of 1 to 6, and z8' is an integer of 0 to 6 such as an integer of 1 to 6). Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z^{2'} is a C₁₋₆ alkylene group or - (CH₂)_{z7'}-phenylene-(CH₂)_{z8'}-, and preferably -phenylene-(CH₂)_{z8'}-. When Z^{2'} is such a group, light resistance, in particular ultraviolet resistance, can be more increased.

In another preferable embodiment, Z^{2'} is a C₁₋₃ alkylene group. In one embodiment, Z^{2'} can be -CH₂CH₂CH₂-. In another embodiment, Z^{2'} can be -CH₂CH₂-.

R^{32'} is each independently at each occurrence -Z³-SiR³⁴ₙ₂R³⁵₃₋ₙ₂.

Z³ is each independently at each occurrence a single bond, an oxygen atom, or a divalent organic group. The right side of the structure denoted as Z³ below binds to (SiR³⁴ₙ₂R³⁵₃₋ₙ₂).

In one embodiment, Z³ is an oxygen atom.

In one embodiment, Z³ is a divalent organic group.

Z³ is preferably a C₁₋₆ alkylene group, - (CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}-(wherein z7" is an integer of 0 to 6 such as an integer of 1 to 6, and z8" is an integer of 0 to 6 such as an integer of 1 to 6). Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z³ is a C₁₋₆ alkylene group or - (CH₂)_{z7"}-phenylene-(CH₂)_{z8"}-, and preferably -phenylene-(CH₂)_{z8"}-. When Z³ is such a group, light resistance, in particular ultraviolet resistance, can be more increased.

In another preferable embodiment, Z³ is a C₁₋₃ alkylene group. In one embodiment, Z³ can be -CH₂CH₂CH₂-. In another embodiment, Z³ may be -CH₂CH₂-.

R³⁴ is each independently at each occurrence a hydroxyl group or a hydrolyzable group.

Preferably, R³⁴ is each independently at each occurrence a hydrolyzable group.

Preferably, R³⁴ is each independently at each occurrence -OR^{j}, -OCOR^{j}, -O-N=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (i.e., an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among such groups, an alkyl group, in particular an unsubstituted alkyl group, is preferable, and a methyl group or an ethyl group is more preferable. In one embodiment, R^{j} is a methyl group, and in another embodiment, R^{j} is an ethyl group.

R³⁵ is each independently at each occurrence a hydrogen atom or a monovalent organic group. The monovalent organic group is a monovalent organic group excluding the hydrolyzable group.

The monovalent organic group of R³⁵ is preferably a C₁₋₂₀ alkyl group or - (CH₂)_{y9}-O-(CH₂)_{y10}-, wherein y9 is an integer of 0 to 6 such as an integer of 1 to 6, and y10 is an integer of 0 to 6 such as an integer of 1 to 6, and is more preferably a C₁₋₂₀ alkyl group. The C₁₋₂₀ alkyl group is preferably a C₁₋₆ alkyl group, and more preferably a methyl group.

In the formula, n2 is each independently an integer of 0 to 3 for each (SiR³⁴ₙ₂R³⁵₃₋ₙ₂) unit. However, when R^{si} is a group represented by the formula (S4), the terminal moieties of the formulae (1) and (2) have at least one (SiR³⁴ₙ₂R³⁵₃₋ₙ₂) unit wherein n2 is 1 to 3. That is, in such terminal moieties, not all n2 are 0 at the same time. In other words, in the terminal moieties of the formula (1) and the formula (2), at least one Si atom to which a hydroxyl group or a hydrolyzable group is bonded is present.

n2 is each independently an integer of preferably 1 to 3, more preferably 2 to 3, and even more preferably 3 for each (SiR³⁴ₙ₂R³⁵₃₋ₙ₂) unit.

R^{33'} is each independently at each occurrence a hydrogen atom, a hydroxyl group, or a monovalent organic group. The monovalent organic group is a monovalent organic group excluding the hydrolyzable group.

The monovalent organic group of R^{33'} is preferably a C₁₋₂₀ alkyl group or - (CₛH₂ₛ)t₁-(O-CₛH₂ₛ)t₂ (wherein s is an integer of 1 to 6 and preferably an integer of 2 to 4, t1 is 1 or 0 and preferably 0, t2 is an integer of 1 to 20, preferably an integer of 2 to 10, and more preferably an integer from 2 to 6), more preferably a C₁₋₂₀ alkyl group, even more preferably a C₁₋₆ alkyl group, and particularly preferably a methyl group.

In one embodiment, R^{33'} is a hydroxyl group.

In another embodiment, the monovalent organic group of R^{33'} is preferably a C₁₋₂₀ alkyl group, and more preferably a C₁₋₆ alkyl group.

q2' is each independently at each occurrence an integer of 0 to 3, and r2' is each independently at each occurrence an integer of 0 to 3. The sum of q2' and r2' is 3 in the (CR^{32'}_{q2'}R^{33'}_{r2'}) unit.

q2' is each independently an integer of preferably 1 to 3, more preferably 2 to 3, and even more preferably 3 for each (CR^{32'}_{q2'}R^{33'}_{r2'}) unit.

R³² is each independently at each occurrence -Z³-SiR³⁴ₙ₂R³⁵₃₋ₙ₂. -Z³-SiR³⁴ₙ₂R³⁵₃₋ₙ₂ has the same meanings as those described for R^{32'}.

R³³ is each independently at each occurrence a hydrogen atom, a hydroxyl group, or a monovalent organic group. The monovalent organic group is a monovalent organic group excluding the hydrolyzable group.

The monovalent organic group of R³³ is preferably a C₁₋₂₀ alkyl group or - (CₛH₂ₛ)t₁-(O-CₛH₂ₛ)t₂ (wherein s is an integer of 1 to 6 and preferably an integer of 2 to 4, t1 is 1 or 0 and preferably 0, t2 is an integer of 1 to 20, preferably an integer of 2 to 10, and more preferably an integer from 2 to 6), more preferably a C₁₋₂₀ alkyl group, even more preferably a C₁₋₆ alkyl group, and particularly preferably a methyl group.

In one embodiment, R³³ is a hydroxyl group.

In another embodiment, the monovalent organic group of R³³ is preferably a C₁₋₂₀ alkyl group, and more preferably a C₁₋₆ alkyl group.

p2 is each independently at each occurrence an integer of 0 to 3, q2 is each independently at each occurrence an integer of 0 to 3, and r2 is each independently at each occurrence an integer of 0 to 3. The sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferable embodiment, p2 is 3.

In one embodiment, q2 is each independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, and even more preferably 3 for each (CR³¹ₚ₂R³²_{q2}R³³ᵣ₂) unit.

R^{e1} is each independently at each occurrence -Z³-SiR³⁴ₙ₂R³⁵₃₋ₙ₂. -Z³-SiR³⁴n₂R³⁵₃₋ₙ₂ has the same meanings as those described for R^{32'}.

R^{f1} is each independently at each occurrence a hydrogen atom, a hydroxyl group, or a monovalent organic group. The monovalent organic group is a monovalent organic group excluding the hydrolyzable group.

The monovalent organic group of R^{f1} is preferably a C₁₋₂₀ alkyl group or - (CₛH₂ₛ)ₜ₁-(O-CₛH₂ₛ)ₜ₂ (wherein s is an integer of 1 to 6 and preferably an integer of 2 to 4, t1 is 1 or 0 and preferably 0, t2 is an integer of 1 to 20, preferably an integer of 2 to 10, and more preferably an integer from 2 to 6), more preferably a C₁₋₂₀ alkyl group, even more preferably a C₁₋₆ alkyl group, and particularly preferably a methyl group.

In one embodiment, R^{f1} is a hydroxyl group.

In another embodiment, R^{f1} is a monovalent organic group, preferably a C₁₋₂₀ alkyl group, and more preferably a C₁₋₆ alkyl group.

k2 is each independently at each occurrence an integer of 0 to 3, l2 is each independently at each occurrence an integer of 0 to 3, and m2 is each independently at each occurrence 0 to 3. The sum of k2, l2, and m2 is 3 in the (CR^{d1}ₖ₂R^{e1}₁₂R^{f1}ₘ₂) unit.

In one embodiment, when R^{si} is a group represented by the formula (S4), two or more, for example, 2 to 27, preferably 2 to 9, more preferably 2 to 6, even more preferably 2 to 3, and particularly preferably 3 (SiR³⁴ₙ₂R³⁵₃₋ₙ₂) units in which n2 is 1 to 3, preferably 2 or 3, and more preferably 3 are present in each terminal moiety of the formula (1) and the formula (2).

In a preferable embodiment, when R^{32'} is present in the formula (S4), n2 is an integer of 1 to 3, preferably 2 or 3, and more preferably 3 in at least one and preferably all R^{32'} groups.

In a preferable embodiment, when R³² is present in the formula (S4), n2 is an integer of 1 to 3, preferably 2 or 3, and more preferably 3 in at least one and preferably all R³² groups.

In a preferable embodiment, when R^{e1} is present in the formula (S4), n2 is an integer of 1 to 3, preferably 2 or 3, and more preferably 3 in at least one and preferably all R^{a1} groups.

In a preferable embodiment, k2 is 0, l2 is 2 or 3 and preferably 3, and n2 is 2 or 3 and preferably 3 in the formula (S4).

R^{g1} and R^{h1} are each independently at each occurrence - Z⁴-SiR¹¹ₙ₁R¹²₃₋ₙ₁, -Z⁴-SiR^{a1}ₖ₁R^{b1}₁₁R^{c1}ₘ₁, or -Z⁴-CR^{d1}ₖ₂R^{e1}₁₂R^{f1}ₘ₂. Here, R¹¹, R¹², R^{a1}, R^{b2}, R^{c1}, R^{d1}, R^{e1}, R^{f1}, n1, k1, l1, m1, k2, l2, and m2 have the same meanings as those described above.

In a preferable embodiment, R^{g1} and R^{h1} are each independently -Z⁴-SiR¹¹n₁R¹²₃₋ₙ₁.

Z⁴ is each independently at each occurrence a single bond, an oxygen atom, or a divalent organic group. The right side of the structure denoted as Z⁴ below binds to (SiR¹¹ₙ₁R¹²₃₋ₙ₁).

In one embodiment, Z⁴ is an oxygen atom.

In one embodiment, Z⁴ is a divalent organic group.

Z⁴ is preferably a C₁₋₆ alkylene group, - (CH₂)_{z5"}-O-(CH₂)_{z6"}- (wherein z5" is an integer of 0 to 6 such as an integer of 1 to 6, and z6" is an integer of 0 to 6 such as an integer of 1 to 6), or -(CH₂)_{z7"}-phenylene-(CH₂)_{z8"}-(wherein z7" is an integer of 0 to 6 such as an integer of 1 to 6, and z8" is an integer of 0 to 6 such as an integer of 1 to 6). Such a C₁₋₆ alkylene group may be linear or branched, and is preferably linear. These groups may be substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferable embodiment, Z⁴ is a C₁₋₆ alkylene group or - (CH₂)_{z7"}-phenylene-(CH₂)_{z8"}-, and preferably -phenylene-(CH₂) _{z8"}-. When Z⁴ is such a group, light resistance, in particular ultraviolet resistance, can be more increased.

In another preferable embodiment, Z⁴ is a C₁₋₃ alkylene group. In one embodiment, Z⁴ can be -CH₂CH₂CH₂-. In another embodiment, Z⁴ may be -CH₂CH₂-.

In one embodiment, R^{si} is a group represented by the formula (S2), (S3), (S4), or (S5). These compounds are capable of forming a surface-treating layer having high surface lubricity.

In one embodiment, R^{si} is a group represented by the formula (S1), (S3), (S4), or (S5). These compounds have a plurality of hydrolyzable groups at one terminal, and are therefore capable of forming a surface-treating layer that firmly adheres to a substrate and that has high friction durability.

In one embodiment, R^{si} is a group represented by the formula (S1), (S3), or (S4). These compounds have a plurality of hydrolyzable groups at one terminal, and are therefore capable of forming a surface-treating layer that firmly adheres to a substrate and that has high friction durability.

In one embodiment, R^{si} is a group represented by the formula (S3) or (S4). These compounds can have a plurality of hydrolyzable groups branched from one Si atom or C atom at one terminal, and are therefore capable of forming a surface-treating layer that has higher friction durability.

In one embodiment, R^{si} is a group represented by the formula (S1).

In one embodiment, R^{si} is a group represented by the formula (S2).

In one embodiment, R^{si} is a group represented by the formula (S3).

In one embodiment, R^{Si} is a group represented by the formula (S4).

In one embodiment, R^{Si} is a group represented by the formula (S5).

In a preferable embodiment, R^{si} bonded to X^{B} is a group represented by the formula (S3) or (S4).

In a particularly preferable embodiment, R^{si} bonded to X^{B} is a group represented by the formula (S4).

In one embodiment, R^{si} in R¹ is a group represented by the formula (S2).

In a preferable embodiment, R^{si} bonded to X^{B} is a group represented by the formula (S3) or (S4) and preferably a group represented by the formula (S4), and R^{Si} in R¹ is a group represented by formula (S2).

In the formulae (1) and (2), X^{A} is each independently a single bond or a group represented by the following formula:

- (X⁵¹)ₚ₅-

wherein
X⁵¹ is each independently at each occurrence a group selected from the group consisting of -O-, -S-, an o-, m- or p-phenylene group, -C(O)O-, -OC(O)-, -Si(R⁵³)₂-, - (Si(R⁵³)₂O)ₘ₅-Si(R⁵³)₂-, -CONR⁵⁴-, -NR⁵⁴CO-, -O-CONR⁵⁴-, -NR⁵⁴COO-, -NR⁵⁴-, and -(CH₂)ₙ₅-,
R⁵³ is each independently at each occurrence a phenyl group, a C₁₋₆ alkyl group, or a C₁₋₆ alkoxy group, preferably a phenyl group or a C₁₋₆ alkyl group, and more preferably a methyl group,
R⁵⁴ is each independently at each occurrence a hydrogen atom, a phenyl group, or a C₁₋₆ alkyl group (preferably a methyl group),
m5 is each independently at each occurrence an integer of 1 to 100 and preferably an integer of 1 to 20,
n5 is each independently at each occurrence an integer of 1 to 20, preferably an integer of 1 to 6, and more preferably an integer of 1 to 3, and
p5 is an integer of 1 to 10, preferably an integer of 1 to 5, and more preferably an integer of 1 to 3.
In the description of X^{A}, the left side of each group is bonded to R^{F1} or R^{F2} in the formulae, and the right side is bonded to the carbon atom of CONR¹.

In one embodiment, X^{A} does not include a siloxane bond (-Si-O-Si-) .

In one embodiment, X^{A} is a single bond.

In another embodiment, X^{A} is -(X⁵¹)ₚ₅-.

In a preferable embodiment, X⁵¹ is each independently at each occurrence a group selected from the group consisting of -O-, -C(O)O-, -OC(O)-, -CONR⁵⁴-, -NR⁵⁴CO-, -O-CONR⁵⁴-, - NR⁵⁴CO-O-, -NR⁵⁴-, and - (CH₂)ₙ₅-.

In a preferable embodiment, X⁵¹ is each independently at each occurrence a group selected from the group consisting of -O-, -CONR⁵⁴-, -NR⁵⁴CO-, and -(CH₂)ₙ₅-.

In a more preferable embodiment, X⁵¹ is each independently at each occurrence a group selected from the group consisting of -O- and -(CH₂)ₙ₅-.

In another embodiment, X^{A} is each independently a single bond or a group represented by the following formula:

-(R^{51'})_{p5'}-(X^{51'})_{q5'}-(R^{51'})_{p5"}-

wherein
R^{51'} is each independently a C₁₋₆ alkylene group,
X^{51'} is O,
p5' is 0 or 1,
p5" is 0 or 1, and
q5' is 0 or 1,
provided that at least one of p5' and p5" is 1.

In another embodiment, X^{A} is each independently a C₁₋₆ alkylene group.

In the formulae (1) and (2), X^{B} is each independently a single bond or a group represented by the following formula:

- (X⁶¹)ₚ₆-

wherein
X⁶¹ is each independently at each occurrence a group selected from the group consisting of -O-, -S-, an o-, m- or p-phenylene group, -C(O)O-, -OC(O)-, -Si(R⁶³)₂-, - (Si(R⁶³)₂O)ₘ₆-Si(R⁶³)₂-, -CONR⁶⁴-, -NR⁶⁴CO-, -O-CONR⁶⁴-, -NR⁶⁴COO-, -NR⁶⁴-, and -(CH₂)ₙ₆-,
R⁶³ is each independently at each occurrence a phenyl group, a C₁₋₆ alkyl group, or a C₁₋₆ alkoxy group, preferably a phenyl group or a C₁₋₆ alkyl group, and more preferably a methyl group,
R⁶⁴ is each independently at each occurrence a hydrogen atom, a phenyl group, or a C₁₋₆ alkyl group (preferably a methyl group),
m6 is each independently at each occurrence an integer of 1 to 100 and preferably an integer of 1 to 20,
n6 is each independently at each occurrence an integer of 1 to 20, preferably an integer of 1 to 6, and more preferably an integer of 1 to 3, and
p6 is an integer of 1 to 10, preferably an integer of 1 to 5, and more preferably an integer of 1 to 3.
In the description of X^{B}, the left side of each group is bonded to the nitrogen atom of CONR¹, and the right side is bonded to R^{si}.

In one embodiment, X^{B} does not include a siloxane bond (-Si-O-Si-) .

In one embodiment, X^{B} is a single bond.

In another embodiment, X^{B} is - (X⁶¹)ₚ₆-.

In a preferable embodiment, X⁶¹ is each independently at each occurrence a group selected from the group consisting of -O-, -C(O)O-, -OC(O)-, -CONR⁶⁴-, -NR⁶⁴CO-, -O-CONR⁶⁴-, - NR⁶⁴CO-O-, -NR⁶⁴-, and - (CH₂)ₙ₆-.

In a preferable embodiment, X⁶¹ is each independently at each occurrence a group selected from the group consisting of -O-, -CONR⁶⁴-, -NR⁶⁴CO-, and -(CH₂)ₙ₆-.

In a more preferable embodiment, X⁶¹ is each independently at each occurrence a group selected from the group consisting of -O- and -(CH₂)ₙ₆-.

In another embodiment, X^{B} is each independently a single bond or a group represented by the following formula:

-(R^{61'})_{p6'}-(X^{61'})_{q6'}-(R^{61'})ₚ₆-

wherein
R^{61'} is each independently a C₁₋₆ alkylene group,
X^{61'} is O,
p6' is 0 or 1,
p6" is 0 or 1, and
q6' is 0 or 1,
provided that at least one of p6' and p6" is 1.

In another embodiment, X^{B} is each independently a C₁₋₆ alkylene group.

In one embodiment, X^{A} is a single bond, and X^{B} is each independently a C₁₋₆ alkylene group.

In one embodiment, the fluoropolyether group-containing silane compound represented by the formula (1) or the formula (2) does not contain a siloxane bond (-Si-O-Si-).

The average molecular weight of the fluoropolyether group-containing silane compound represented by the formula (1) or the formula (2) may be, but is not limited to, 5 × 10² to 1 × 10⁵. In this range, the average molecular weight is preferably 2,000 to 32,000 and more preferably 2,500 to 12,000 from the viewpoint of friction durability. The "average molecular weight" refers to a number average molecular weight, and the "average molecular weight" is a value obtained by ¹⁹F-NMR measurement.

The fluoropolyether group-containing silane compound represented by the formulae (1) and (2) can be produced by the following method:

A compound represented by the formula (1a) or (2a):

PFPE - COOH (1a)

HOCO - PFPE - COOH (2a)

(wherein PFPE is a fluoropolyether group) is reacted with a compound represented by the formula (5): 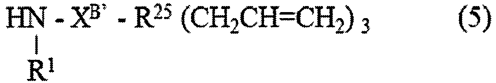 (wherein
R¹ has the same meanings as those described for the formulae (1) and (2),
R²⁵ is C or Si, and
X^{B'} is a single bond or a divalent organic group) to give a perfluoropolyether group-containing allyl compound represented by the formula (1b) or (2b): 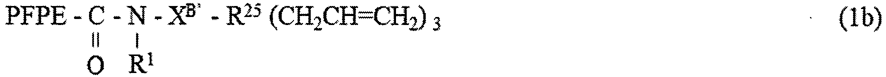 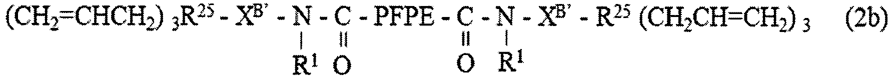 (wherein PFPE, R¹, R²⁵, and X^{B'} have the same meanings as those described above).

Next, the compound represented by the formula (1b) or (2b) is reacted with a compound represented by the formula (6) :

HSiR²⁶₃ (6)

(wherein R²⁶ is each independently a hydrogen atom, a monovalent organic group, a hydroxyl group, a hydrolyzable group, or a halogen atom),
optionally a hydrolyzable group is introduced to the Si atom, and thereby a compound represented by the formula (1) or (2) can be obtained.

The reaction conditions of each step of the above reactions can be suitably set by those skilled in the art.

Next, the surface-treating agent of the present invention will now be described.

The surface-treating agent of the present disclosure contains at least one fluoropolyether group-containing silane compound represented by the formula (1) or (2).

In one embodiment, the fluoropolyether group-containing silane compound in the surface-treating agent of the present disclosure is a compound represented by the formula (1).

In another embodiment, the fluoropolyether group-containing silane compound in the surface-treating agent of the present disclosure is a compound represented by the formula (2).

In another embodiment, the fluoropolyether group-containing silane compound in the surface-treating agent of the present disclosure is a compound represented by the formula (1) and a compound represented by the formula (2).

In the surface-treating agent of the present disclosure, the content of the compound represented by the formula (2) is preferably 0.1 mol% or more and 35 mol% or less based on the total of the compound represented by the formula (1) and the compound represented by the formula (2). The lower limit of the content of the compound represented by the formula (2) may be preferably 0.1 mol%, more preferably 0.2 mol%, even more preferably 0.5 mol%, yet more preferably 1 mol%, particularly preferably 2 mol%, and especially 5 mol%, based on the total of the compound represented by the formula (1) and the compound represented by the formula (2). The upper limit of the content of the compound represented by the formula (2) may be preferably 35 mol%, more preferably 30 mol%, even more preferably 20 mol%, and yet more preferably 15 mol% or 10 mol%, based on the total of the compound represented by the formula (1) and the compound represented by the formula (2). The compound represented by the formula (2) is preferably 0.1 mol% or more and 30 mol% or less, more preferably 0.1 mol% or more and 20 mol% or less, even more preferably 0.2 mol% or more and 10 mol% or less, yet more preferably 0.5 mol% or more and 10 mol% or less, and particularly preferably 1 mol% or more and 10 mol% or less, for example, 2 mol% or more and 10 mol% or less, or 5 mol% or more and 10 mol% or less, based on the total of the compound represented by the formula (1) and the compound represented by the formula (2). With the compound represented by the formula (2) being within such a range, friction durability can be more increased.

The content of the compound represented by the formula (1) or (2) is preferably 0.1 to 50.0 mass%, more preferably 1.0 to 30.0 mass%, even more preferably 5.0 to 25.0 mass%, and particularly preferably 10.0 to 20.0 mass% based on the entirety of the surface-treating agent. With the content of the fluoropolyether group-containing silane compound being within the above range, higher water- and oil-repellency and friction durability can be obtained.

The surface-treating agent of the present disclosure may contain a solvent, an (unreactive) fluoropolyether compound that can be understood as a fluorine-containing oil, preferably a perfluoro(poly)ether compound (hereinafter, collectively referred to as a "fluorine-containing oil"), an (unreactive) silicone compound that can be understood as a silicone oil (hereinafter, referred to as a "silicone oil"), an alcohol, a catalyst, a surfactant, a polymerization inhibitor, a sensitizer, and the like.

Examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide and N,N-dimethylacetamide; ether alcohols such as methyl cellosolve, cellosolve, isopropyl cellosolve, butyl cellosolve, and diethylene glycol monomethyl ether; diethylene glycol monoethyl ether acetate; and fluorine-containing solvents such as 1,1,2-trichloro-1,2,2-trifluoroethane, 1,2-dichloro-1,1,2,2-tetrafluoroethane, dimethyl sulfoxide, 1,1-dichloro-1,2,2,3,3-pentafluoropropane (HCFC 225), Zeorora H, HFE 7100, HFE 7200, HFE 7300, CF₃CH₂OH, CF₃CF₂CH₂OH, and (CF₃)₂CHOH. Alternatively, the solvent may be a mixed solvent of two or more of such solvents.

Examples of the fluorine-containing oil include, but are not limited to, compounds (perfluoro(poly)ether compounds) represented by the following general formula (3):

Rf⁵-(OC₄F₈)_{a'}-(OC₃F₆)_{b'}-(OC₂F₄)_{c'}-(OCF₂)_{d'}-Rf⁶ ... (3)

wherein Rf⁵ represents a C₁₋₁₆ alkyl group optionally substituted with one or more fluorine atoms (preferably, a C₁₋₁₆ perfluoroalkyl group), Rf⁶ represents a C₁₋₁₆ alkyl group optionally substituted with one or more fluorine atoms (preferably, a C₁₋₁₆ perfluoroalkyl group), a fluorine atom, or a hydrogen atom, and Rf⁵ and Rf⁶ more preferably are each independently a C₁₋₃ perfluoroalkyl group.
a', b', c', and d' represent the respective four numbers of repeating units in perfluoro(poly)ether constituting the main backbone of the polymer and are mutually independently an integer of 0 or more and 300 or less, and the sum of a', b', c', and d' is at least 1, preferably 1 to 300, more preferably 20 to 300. The occurrence order of the respective repeating units enclosed in parentheses provided with a subscript a', b', c', or d' is not limited in the formula. Among such repeating units, -(OC₄F₈)- may be any of-(OCF₂CF₂CF₂CF₂)-, - (OCF(CF₃)CF₂CF₂)-, - (OCF₂CF(CF₃)CF₂)-, - (OCF₂CF₂CF(CF₃))-, - (OC(CF₃)₂CF₂)-, -(OCF₂C(CF₃)₂)-, - (OCF(CF₃)CF(CF₃))-, -(OCF(C₂F₅)CF₂)-, and (OCF₂CF(C₂F₅))-, but it is preferably -(OCF₂CF₂CF₂CF₂)-. -(OC₃F₆)- may be any of -(OCF₂CF₂CF₂)-, -(OCF(CF₃)CF₂)-, and (OCF₂CF(CF₃))-, and is preferably - (OCF₂CF₂CF₂)-. -(OC₂F₄)- may be any of - (OCF₂CF₂)-and (OCF(CF₃))-, and is preferably -(OCF₂CF₂)-.

Examples of the perfluoro(poly)ether compound represented by the general formula (3) include compounds represented by any of the following general formulae (3a) and (3b) (one of which may be used singly, or two or more may be used as a mixture):

Rf⁵-(OCF₂CF₂CF₂)_{b"}-Rf⁶ ... (3a)

Rf⁵-(OCF₂CF₂CF₂CF₂)_{a"}-(OCF₂CF₂CF₂)_{b"}-(OCF₂CF₂)_{c"}-(OCF₂)_{d"}-Rf⁶ ... (3b)

wherein Rf⁵ and Rf⁶ are as described above; in formula (3a), b" is an integer of 1 or more and 100 or less; and in formula (3b), a" and b" are each independently an integer of 0 or more and 30 or less, and c' ' and d' ' are each independently an integer of 1 or more and 300 or less. The occurrence order of the respective repeating units enclosed in parentheses provided with a subscript a", b", c", or d" is not limited in the formulae.

From another viewpoint, the fluorine-containing oil may be a compound represented by the general formula Rf³-F wherein Rf³ is a C₅₋₁₆ perfluoroalkyl group. The fluorine-containing oil may be a chlorotrifluoroethylene oligomer.

The fluorine-containing oil may have an average molecular weight of 500 to 10,000. The molecular weight of the fluorine-containing oil may be measured with GPC.

The fluorine-containing oil may be contained in an amount of, for example, 0 to 50 mass%, preferably 0 to 30 mass%, and more preferably 0 to 5 mass% based on the surface-treating agent of the present disclosure. In one embodiment, the surface-treating agent of the present disclosure is substantially free of the fluorine-containing oil. Being substantially free of the fluorine-containing oil means that the fluorine-containing oil is not contained at all, or an extremely small amount of the fluorine-containing oil may be contained.

In one embodiment, the average molecular weight of the fluorine-containing oil may be greater than the average molecular weight of the fluoropolyether group-containing silane compound. With such average molecular weights, better friction durability and surface lubricity can be obtained when forming the surface-treating layer by a vacuum deposition method.

In one embodiment, the average molecular weight of the fluorine-containing oil may be smaller than the average molecular weight of the fluoropolyether group-containing silane compound. With such average molecular weights, a cured product having high friction durability and high surface lubricity can be formed while suppressing deterioration of the transparency of the surface-treating layer obtained from the compound.

The fluorine-containing oil contributes to increasing the surface lubricity of the layer formed of the surface-treating agent of the present disclosure.

For example, a linear or cyclic silicone oil having 2,000 or less siloxane bonds can be used as the silicone oil. The linear silicone oil may be a so-called straight silicone oil or modified silicone oil. Examples of the linear silicone oil include dimethyl silicone oil, methyl phenyl silicone oil, and methyl hydrogen silicone oil. Examples of the modified silicone oil include those obtained by modifying linear silicone oil with alkyl, aralkyl, polyether, higher fatty acid ester, fluoroalkyl, amino, epoxy, carboxyl, alcohol, or the like. An example of the cyclic silicone oil includes cyclic dimethylsiloxane oil.

In the surface-treating agent of the present disclosure, the silicone oil may be contained in an amount of, for example, 0 to 300 parts by mass, and preferably 50 to 200 parts by mass, based on total 100 parts by mass of the fluoropolyether group-containing silane compound of the present disclosure (in the case of two or more kinds, the total thereof, and the same applies below).

The silicone oil contributes to increasing the surface lubricity of the surface-treating layer.

Examples of the alcohol include alcohols having 1 to 6 carbon atoms optionally substituted with one or more fluorine atoms, such as methanol, ethanol, iso-propanol, tert-butanol, CF₃CH₂OH, CF₃CF₂CH₂OH, and (CF₃)₂CHOH. Such an alcohol added to the surface-treating agent increases the stability of the surface-treating agent and improves the miscibility between the perfluoropolyether group-containing silane compound and the solvent.

The alcohol is preferably 2,2,3,3,3-pentafluoro-1-propanol or 2,2,2-trifluoroethanol.

Examples of the catalyst include acids (such as acetic acid and trifluoroacetic acid), bases (such as ammonia, triethylamine, and diethylamine), and transition metals (such as Ti, Ni, and Sn).

The catalyst promotes hydrolysis and dehydrative condensation of the fluoropolyether group-containing silane compound of the present disclosure, and promotes formation of a layer formed of the surface-treating agent of the present disclosure.

Examples of further components include, in addition to those described above, tetraethoxysilane, methyltrimethoxysilane, 3-aminopropyltrimethoxysilane, 3-glycidoxypropyltrimethoxysilane, and methyltriacetoxysilane.

The surface-treating agent of the present disclosure can be formed into pellets by impregnating a porous material such as a porous ceramic material or a metal fiber such as a fiber obtained by, for example, solidifying steel wool in a cotton-like form with the surface-treating agent. Such pellets can be used in, for example, vacuum deposition.

The surface-treating agent of the present disclosure may contain, in addition to the components described above, trace amounts of Pt, Rh, Ru, 1,3-divinyltetramethyldisiloxane, triphenylphosphine, NaCl, KCl, silane condensates, and the like as impurities.

Below, the article of the present disclosure will now be described.

The article of the present disclosure includes a substrate and a layer (a surface-treating layer) on the substrate surface, the layer being formed of the surface-treating agent of the present disclosure.

The substrate usable in the present disclosure may be composed of any suitable material such as glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film) such as a hard coat layer or an antireflection layer may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more may be used in combination (for example, as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The shape of the substrate is not limited, and may be, for example, in the form of a plate, a film, or the like. The surface region of the substrate on which a surface-treating layer is to be formed may be at least a part of the substrate surface, and may be suitably determined according to the application, specific configuration, and the like of an article to be produced.

In one embodiment, the substrate, or at least the surface portion thereof, may be composed of a material originally having a hydroxyl group. Examples of the material include glass, as well as metal (in particular, base metal) where a natural oxidized film or a thermal oxidized film is formed on the surface, ceramics, and semiconductors. Alternatively, when the substrate has an insufficient amount of hydroxyl groups or when the substrate originally has no hydroxyl group as in resin and the like, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups to the substrate surface, but also clean the substrate surface (remove foreign matter and the like). Another example of such a pre-treatment is a method wherein a monolayer of a surface adsorbent having a carbon-carbon unsaturated bonding group is formed on the surface of the substrate by a LB method (a Langmuir-Blodgett method), a chemical adsorption method, or the like beforehand, and thereafter cleaving the unsaturated bond under an atmosphere containing oxygen, nitrogen, or the like.

In another embodiment, the substrate, or at least the surface portion thereof, may be composed of a material comprising another reactive group such as a silicone compound having one or more Si-H groups or alkoxysilane.

In a preferable embodiment, the substrate is glass. Such glass is preferably sapphire glass, soda-lime glass, alkali aluminosilicate glass, borosilicate glass, alkali-free glass, crystal glass, or quartz glass, and is particularly preferably chemically strengthened soda-lime glass, chemically strengthened alkali aluminosilicate glass, or chemically bonded borosilicate glass.

The article of the present disclosure can be produced by forming a layer of the surface-treating agent of the present disclosure on the surface of the substrate and optionally post-treating the layer, thereby forming a layer from the surface-treating agent of the present disclosure.

The layer of the surface-treating agent of the present disclosure can be formed by applying the surface-treating agent to the surface of the substrate so as to coat the surface. The coating method is not limited. For example, a wet coating method and a dry coating method can be used.

Examples of the wet coating method include dip coating, spin coating, flow coating, spray coating, roll coating, gravure coating, and similar methods.

Examples of the dry coating method include deposition (usually, vacuum deposition), sputtering, CVD, and similar methods. Specific examples of the deposition method (usually, a vacuum deposition method) include resistive heating, highfrequency heating using electron beam, microwave or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of solvents, the following solvents are preferably used: perfluoroaliphatic hydrocarbons having 5 to 12 carbon atoms (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin (registered trademark) AC-6000 manufactured by Asahi Glass Co., Ltd.), and 1,1,2,2,3,3,4-heptafluorocyclopentane (such as Zeorora (registered trademark) H manufactured by Zeon Corporation)); alkyl perfluoroalkyl ethers (the perfluoroalkyl group and the alkyl group may be linear or branched) such as hydrofluoroether (HFE) (such as perfluoropropyl methyl ether (C₃F₇OCH₃) (such as Novec (trademark) 7000 manufactured by Sumitomo 3M Limited), perfluorobutyl methyl ether (C₄F₉OCH₃) (such as Novec (trademark) 7100 manufactured by Sumitomo 3M Limited), perfluorobutyl ethyl ether (C₄F₉OC₂H₅) (such as Novec (trademark) 7200 manufactured by Sumitomo 3M Limited), and perfluorohexyl methyl ether (C₂F₅CF(OCH₃)C₃F₇) (such as Novec (trademark) 7300 manufactured by Sumitomo 3M Limited), or CF₃CH₂OCF₂CHF₂ (such as Asahiklin (registered trademark) AE-3000 manufactured by Asahi Glass Co., Ltd.)). One of these solvents may be used singly, or two or more may be used as a mixture. In particular, hydrofluoroether is preferable, and perfluorobutyl methyl ether (C₄F₉OCH₃) and/or perfluorobutyl ethyl ether (C₄F₉OC₂H₅) is particularly preferable.

When using the dry coating method, the surface-treating agent of the present disclosure may be directly subjected to the dry coating method, or may be diluted with the above solvent before being subjected to the dry coating method.

A layer of the surface-treating agent is preferably formed such that the surface-treating agent of the present disclosure coexists in the layer with a catalyst for hydrolysis and dehydrative condensation. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used to a deposition (usually vacuum deposition) treatment, or a pellet-like material may be used to a deposition (usually vacuum deposition) treatment, wherein the pellet is obtained by impregnating a porous body of metal such as iron or copper with the surface-treating agent of the present disclosure to which the catalyst has been added.

Any suitable acid or base can be used as a catalyst. For example, acetic acid, formic acid, and trifluoroacetic acid can be used as the acid catalyst. The base catalyst may be, for example, ammonia or organic amine.

The surface-treating layer included in the article of the present disclosure has high friction durability. Moreover, the surface-treating layer may have not only high friction durability but also have, depending on the formulation of the surface-treating agent used, water-repellency, oil-repellency, antifouling properties (e.g., preventing grime such as fingerprints from adhering), waterproof properties (preventing water from entering electronic components and the like), surface lubricity (or lubricity, for example, such as removability by wiping of grime such as fingerprints, and excellent tactile sensations to the fingers), chemical resistance, and the like, and may be suitably used as a functional thin film.

Accordingly, the present disclosure further relates to an optical material having the surface-treating layer as the outermost layer.

The optical material preferably includes a wide variety of optical materials in addition to optical materials relating to displays and the like as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article of the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for devices such as mobile phones and personal digital assistants; disc surfaces of optical discs such as Blu-ray (registered trademark) discs, DVD discs, CD-Rs, and MOs; optical fibers; and display surfaces of watches and clocks.

The article of the present disclosure may be medical equipment or a medical material. The article having a layer that is obtained according to the present disclosure may be an automobile interior or exterior member. Examples of the exterior material include the following: windows, light covers, and external camera covers. Examples of the interior material include the following: instrument panel covers, navigation system touch panels, and decorative interior materials.

The thickness of the layer is not limited. The thickness of the layer in the case of an optical member is in the range of 1 to 50 nm, 1 to 30 nm, and preferably 1 to 15 nm, from the viewpoint of optical performance, friction durability, and antifouling properties.

So far, the article of the present disclosure has been described in detail. However, the article of the present disclosure, the method for producing the article, and the like are not limited to those exemplified above.

### Examples

Hereinafter, the article of the present disclosure will now be described in Examples, but the present disclosure is not limited to the following Examples. In the Examples, the occurrence order of the repeating units constituting fluoropolyether is not limited, and the chemical formulae shown below indicate average compositions.

### (Synthetic Example 1)

First, 4.0 g of a mixture of CF₃-(OCF₂CF₂)ₘ-(OCF₂)ₙ-COOH (m ≈ 21, n ≈ 35) and HOCOCF₂-(OCF₂CF₂)ₘ-(OCF₂)ₙ-COOH (m ≈ 21, n ≈ 35) (provided that the content of HOCOCF₂-(OCF₂CF₂)ₘ-(OCF₂)ₙ-COOH was 11 mol%) was dissolved in 6.0 g of 1,3-bis(trifluoromethyl)benzene, and ice-cooled. After 3.0 g of thionyl chloride was added dropwise to the solution, 0.3 mg of N,N-dimethylformamide was further added, and the mixture was stirred at 60°C for 2 hours. Thionyl chloride was distilled off from this reaction solution, then 0.6 g of N-(3,6-dioxaheptyl)-2,2-di(2-propenyl)-4-pentylamine and 1.0 g of N,N-diisopropylethylamine were added while ice-cooling the solution, and the mixture was stirred at room temperature for 3 hours. The end point of the reaction was confirmed by ¹⁹F-NMR according to that the chemical shift of the carbonyl group α position -CF₂- of CF₃-(OCF₂CF₂)ₘ-(OCF₂)ₙ-COOH shifted to a low magnetic field, and by ¹H-NMR according to that the methylene proton at the amino group α-position of diallylamine shifted to a low magnetic field. To the reaction solution was added 1 N hydrochloric acid, and the separated lower layer was washed with water, dried over magnesium sulfate, and concentrated. The resulting concentrate was dissolved in perfluorohexane and washed with acetone three times, and thereby 4.0 g of a mixture containing a polyether group-containing compound (A) and a polyether group-containing compound (A') was obtained.

### Polyether group-containing compound (A):

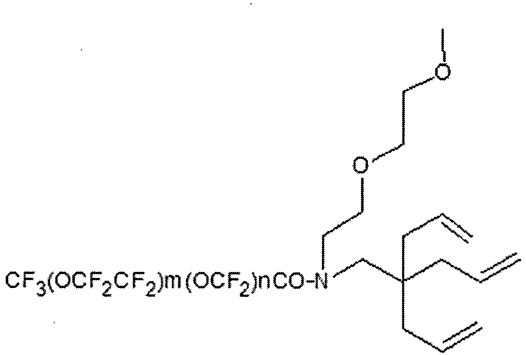

(m ≈ 21, n ≈ 35)

### Polyether group-containing compound (A'):

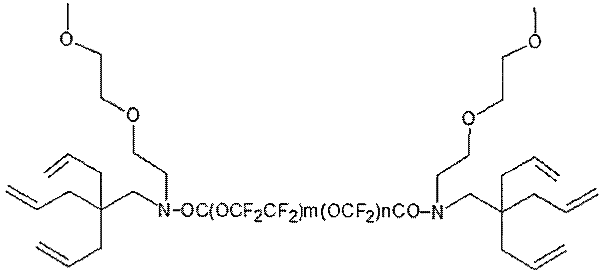

(m ≈ 21, n ≈ 35) (Note that while being contained in trace amounts in the perfluoropolyether group, the (OCF₂CF₂CF₂CF₂) unit and the (OCF₂CF₂CF₂) unit as average formulations were omitted.)

### (Synthetic Example 2)

First, 4.0 g of the mixture obtained in Synthetic Example 1 was dissolved in 5 ml of 1,3-bis(trifluoromethyl)benzene, then 0.01 g of triacetoxymethylsilane and 0.06 ml of a xylene solution containing 2% Pt complex of 1,3-divinyl-1,1,3,3-tetramethyldisiloxane were added, 1.5 g of trichlorosilane was introduced, and the mixture was heated to 60°C and stirred at for 4 hours. Thereafter, volatile matter was distilled off from the resulting solution under reduced pressure, then a mixed solution of 0.1 g of methanol and 3.0 g of trimethyl orthoformate was added, and the mixture was heated to 60°C and stirred for 3 hours. Thereafter, purification was performed, and thus 3.9 g of a mixture containing the following polyether group-containing compound (B) and polyether group-containing compound (B') having trimethoxysilyl groups at the terminals was obtained (provided that the content of the polyether group-containing compound (B') was 11 mol%).

### Polyether group-containing compound (B):

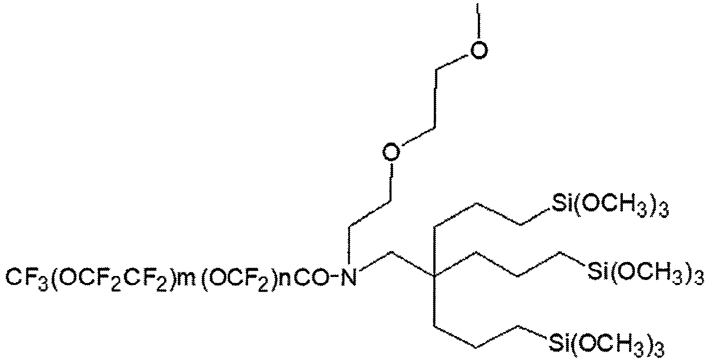

(m ≈ 21, n ≈ 35)

### Polyether group-containing compound (B'):

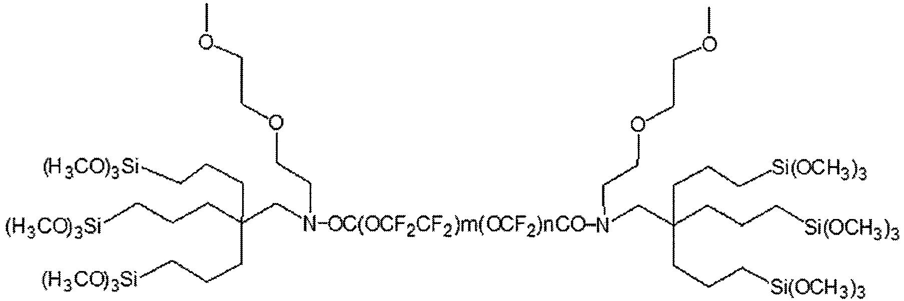

(m ≈ 21, n ≈ 35)
(Note that while being contained in trace amounts in the perfluoropolyether group, the (OCF₂CF₂CF₂CF₂) unit and the (OCF₂CF₂CF₂) unit as average formulations were omitted.)

### (Synthetic Example 3)

Here, 3.9 g of a mixture containing a polyether group-containing compound (C) and a polyether group-containing compound (C') (provided that the content of the polyether group-containing compound (C') was 7 mol%) was obtained in the same manner as Synthetic Examples 1 to 2 except that 4.0 g of a mixture containing CF₃-(OCF₂CF₂)ₘ-(OCF₂)ₙ-COOH (m ≈ 28, n ≈ 26) and HOCOCF₂-(OCF₂CF₂)ₘ-(OCF₂)ₙ-COOH (m ≈ 28, n ≈ 26) (provided that the content of HOCOCF₂-(OCF₂CF₂)ₘ-(OCF₂)ₙ-COOH was 7 mol%) was used.

### Polyether group-containing compound (C):

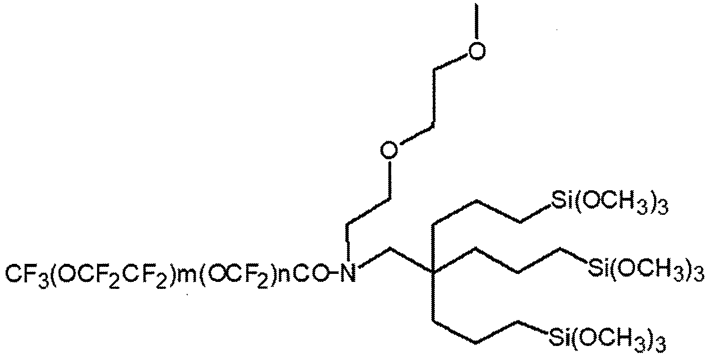

(m ≈ 28, n ≈ 26)

### Polyether group-containing compound (C'):

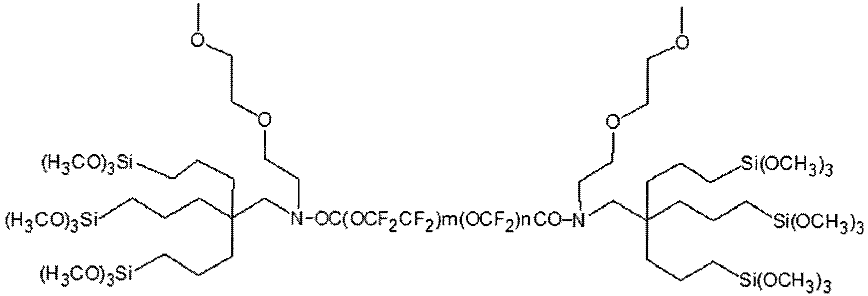

(m ≈ 28, n ≈ 26)
(Note that while being contained in trace amounts in the perfluoropolyether group, the (OCF₂CF₂CF₂CF₂) unit and the (OCF₂CF₂CF₂) unit as average formulations were omitted.)

### (Synthetic Example 4)

Here, 4.2 g of a mixture containing a polyether group-containing compound (D) and a polyether group-containing compound (D') (provided that the content of the polyether group-containing compound (D') was 5 mol%) was obtained in the same manner as Synthetic Examples 1 to 2 except that 4.2 g of a mixture containing CF₃CF₂CF₂-(OCF₂CF₂CF₂)ₘ-OCF₂CF₂COOH (m ≈ 25) and HOCOCF₂CF₂-(OCF₂CF₂CF₂)ₘ-OCF₂CF₂COOH (m ≈ 25) (provided that the content of HOCOCF₂CF₂-(OCF₂CF₂CF₂)ₘ-OCF₂CF₂COOH was 5 mol%) was used.

### Polyether group-containing compound (D):

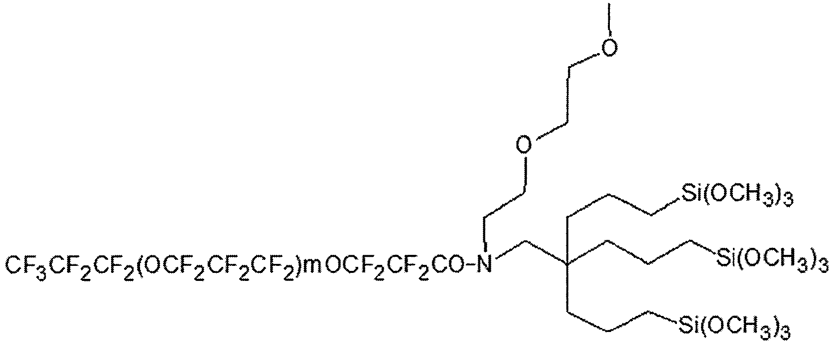

(m ≈ 25)

### Polyether group-containing compound (D'):

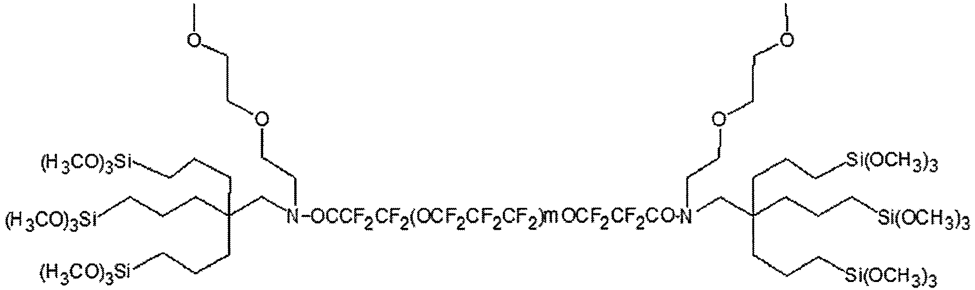

(m ≈ 25)

### (Synthetic Example 5)

Here, 3.8 g of a mixture containing a polyether group-containing compound (E) and a polyether group-containing compound (E') (provided that the content of the polyether group-containing compound (E') was 11 mol%) was obtained in the same manner as Synthetic Examples 1 to 2 except that N-(3,6-dioxaheptyl)-2-(2-propenyl)-4-pentylamine was used in place of N-(3,6-dioxaheptyl)-2,2-di(2-propenyl)-4-pentylamine.

### Polyether group-containing compound (E):

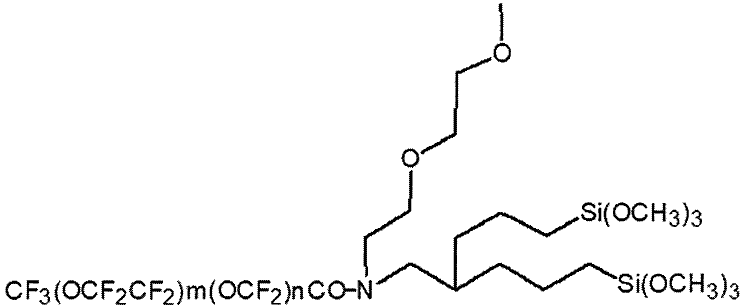

(m ≈ 21, n ≈ 35)

### Polyether group-containing compound (E'):

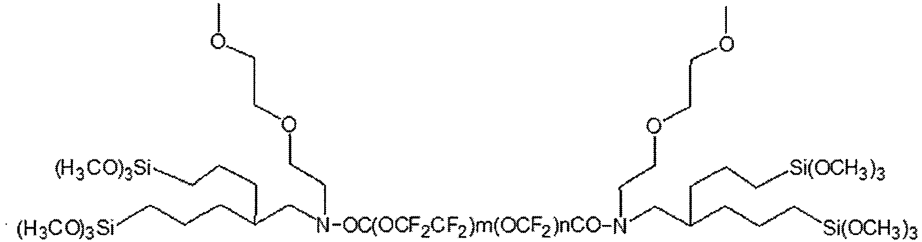

(m ≈ 21, n ≈ 35)
(Note that while being contained in trace amounts in the perfluoropolyether group, the (OCF₂CF₂CF₂CF₂) unit and the (OCF₂CF₂CF₂) unit as average formulations were omitted.)

### (Synthetic Example 6)

Here, 4.0 g of a mixture containing a polyether group-containing compound (F) and a polyether group-containing compound (F') (provided that the content of the polyether group-containing compound (F') was 7 mol%) was obtained in the same manner as Synthetic Example 4 except that 4.0 g of a mixture containing CF₃-(OCF₂CF₂)ₘ-(OCF₂)ₙ-COOH (m ≈ 28, n ≈ 26) and HOCOCF₂-(OCF₂CF₂)ₘ-(OCF₂)ₙ-COOH (m ≈ 28, n ≈ 26) (provided that the content of HOCOCF₂-(OCF₂CF₂)ₘ-(OCF₂)ₙ-COOH was 7 mol%) was used.

### Polyether group-containing compound (F):

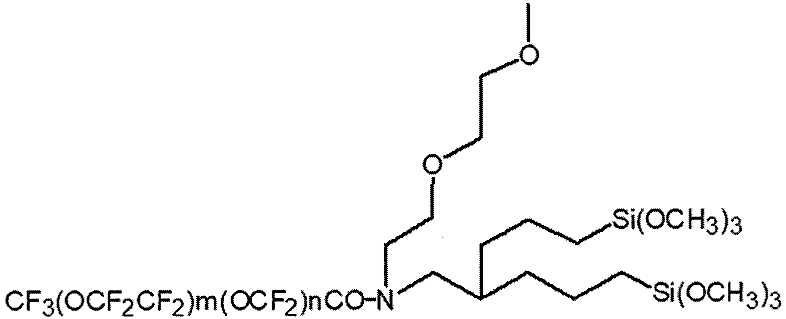

(m ≈ 28, n ≈ 26)

### Polyether group-containing compound (F'):

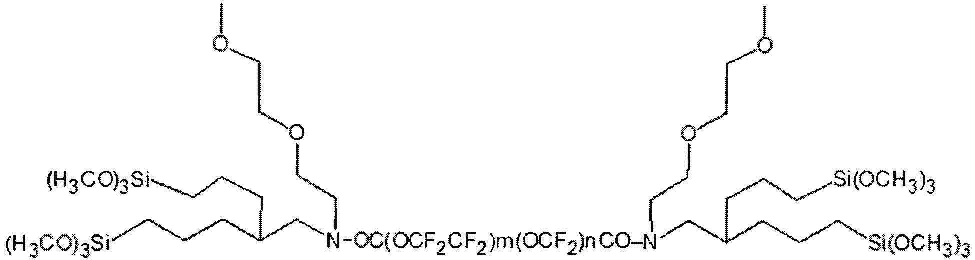

(m ≈ 28, n ≈ 26)
(Note that while being contained in trace amounts in the perfluoropolyether group, the (OCF₂CF₂CF₂CF₂) unit and the (OCF₂CF₂CF₂) unit as average formulations were omitted.)

### (Synthetic Example 7)

Here, 3.9 g of a mixture containing a polyether group-containing compound (G) and a polyether group-containing compound (G') (provided that the content of the polyether group-containing compound (G') was 11 mol%) was obtained in the same manner as Synthetic Examples 1 to 2 except that N-(3,6,9-trioxadecyl)-2,2-di(2-propenyl)-4-pentylamine was used in place of N-(3,6-dioxaheptyl)-2,2-di(2-propenyl)-4-pentylamine.

### Polyether group-containing compound (G):

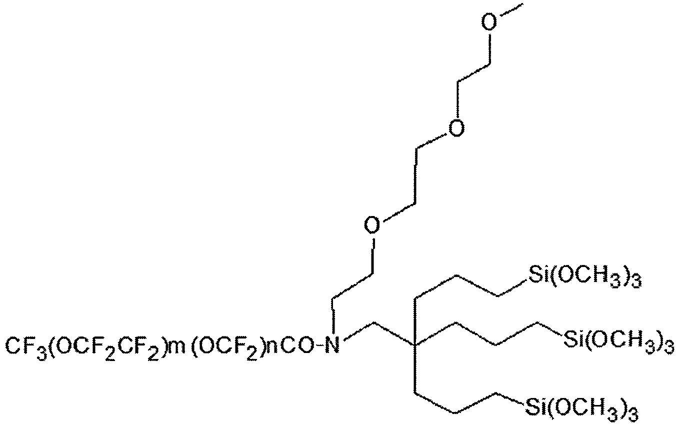

(m ≈ 21, n ≈ 35)

### Polyether group-containing compound (G'):

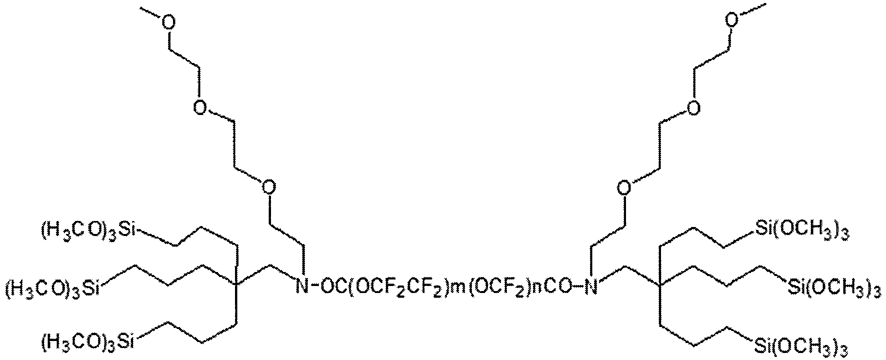

(m ≈ 21, n ≈ 35)
(Note that while being contained in trace amounts in the perfluoropolyether group, the (OCF₂CF₂CF₂CF₂) unit and the (OCF₂CF₂CF₂) unit as average formulations were omitted.)

### (Synthetic Example 8)

Here, 3.7 g of a mixture containing a polyether group-containing compound (H) and a polyether group-containing compound (H') (provided that the content of the polyether group-containing compound (H') was 7 mol%) was obtained in the same manner as Synthetic Example 7 except that 4.0 g of a mixture containing CF₃-(OCF₂CF₂)ₘ-(OCF₂)ₙ-COOH (m ≈ 28, n ≈ 26) and HOCOCF₂-(OCF₂CF₂)ₘ-(OCF₂)ₙ-COOH (m ≈ 28, n ≈ 26) (provided that the content of HOCOCF₂-(OCF₂CF₂)ₘ-(OCF₂)ₙ-COOH was 7 mol%) was used.

### Polyether group-containing compound (H):

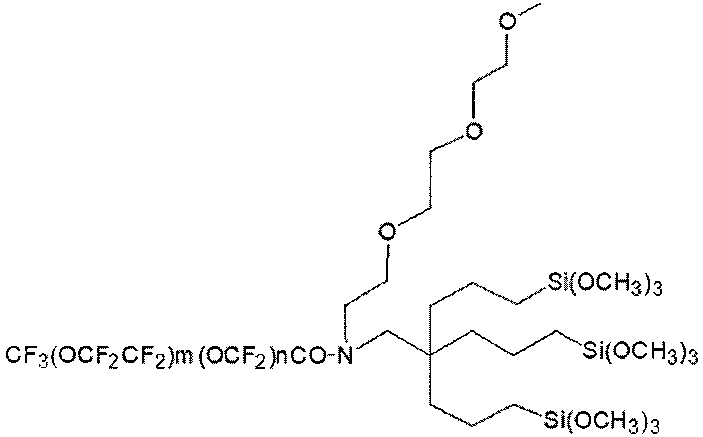

(m ≈ 28, n ≈ 26)

### Polyether group-containing compound (H'):

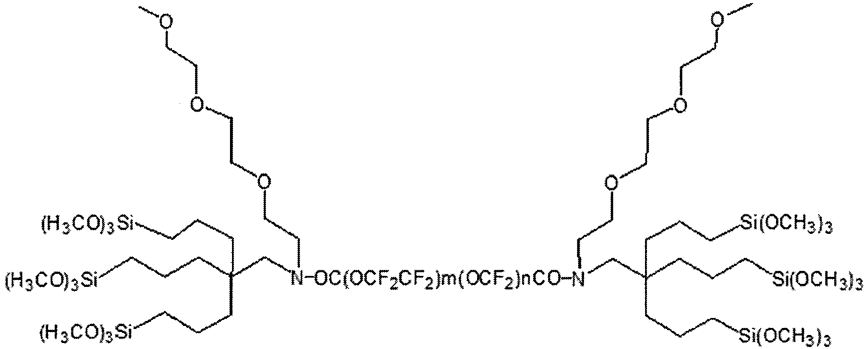

(m ≈ 28, n ≈ 26)
(Note that while being contained in trace amounts in the perfluoropolyether group, the (OCF₂CF₂CF₂CF₂) unit and the (OCF₂CF₂CF₂) unit as average formulations were omitted.)

### (Synthetic Example 9)

Here, 4.1 g of a mixture containing a polyether group-containing compound (I) and a polyether group-containing compound (I') (provided that the content of the polyether group-containing compound (I') was 5 mol%) was obtained in the same manner as Synthetic Example 8 except that 4.2 g of a mixture containing CF₃CF₂CF₂-(OCF₂CF₂CF₂) ₘ-OCF₂CF₂COOH (m ≈ 25) and HOCOCF₂CF₂-(OCF₂CF₂CF₂)ₘ-OCF₂CF₂COOH (m ≈ 25) (provided that the content of HOCOCF₂CF₂-(OCF₂CF₂CF₂)ₘ-OCF₂CF₂COOH was 5 mol%) was used.

### Polyether group-containing compound (I):

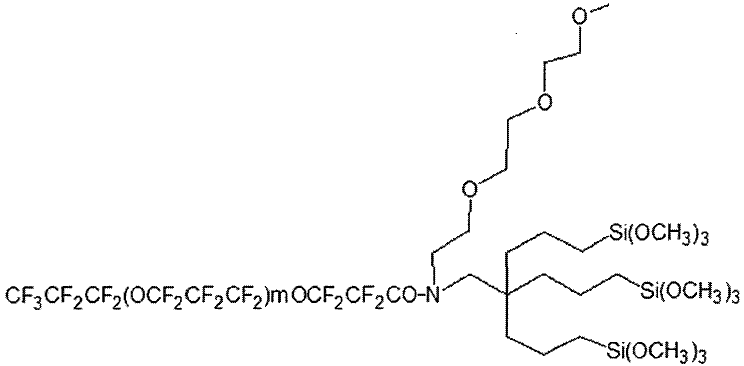

(m ≈ 25)

### Polyether group-containing compound (I'):

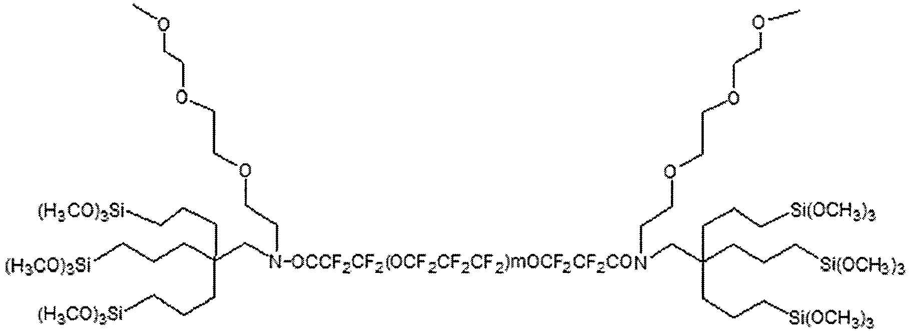

### (m ≈ 25)

### (Synthetic Example 10)

Here, 3.6 g of a mixture containing a polyether group-containing compound (J) and a polyether group-containing compound (J') (provided that the content of the polyether group-containing compound (J') was 11 mol%) was obtained in the same manner as Synthetic Examples 1 to 2 except that N-(3,6,9,11-tetraoxatridecyl)-2,2-di(2-propenyl)-4-pentylamine was used in place of N-(3,6-dioxaheptyl)-2,2-di(2-propenyl)-4-pentylamine.

### Polyether group-containing compound (J):

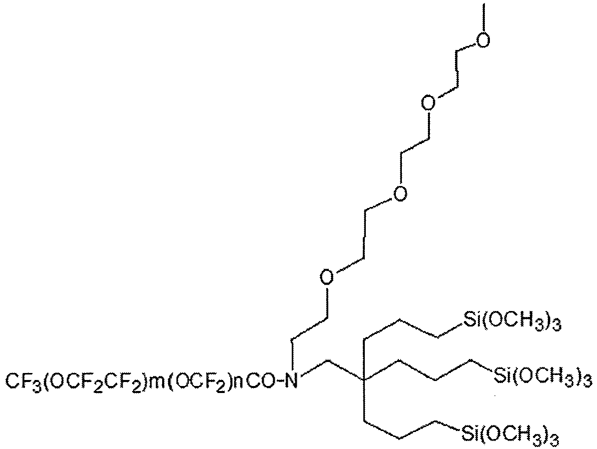

(m ≈ 21, n ≈ 35)

### Polyether group-containing compound (J'):

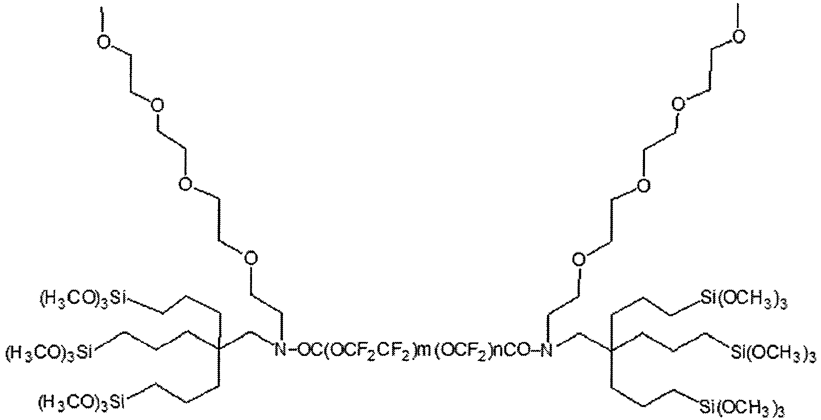

(m ≈ 21, n ≈ 35)
(Note that while being contained in trace amounts in the perfluoropolyether group, the (OCF₂CF₂CF₂CF₂) unit and the (OCF₂CF₂CF₂) unit as average formulations were omitted.)

### (Synthetic Example 11)

Here, 3.9 g of a mixture containing a polyether group-containing compound (K) and a polyether group-containing compound (K') (provided that the content of the polyether group-containing compound (K') was 7 mol%) was obtained in the same manner as Synthetic Example 10 except that 4.0 g of a mixture containing CF₃-(OCF₂CF₂)ₘ-(OCF₂)ₙ-COOH (m ≈ 28, n ≈ 26) and HOCOCF₂-(OCF₂CF₂)ₘ-(OCF₂)ₙ-COOH (m ≈ 28, n ≈ 26) (provided that the content of HOCOCF₂-(OCF₂CF₂)ₘ-(OCF₂)ₙ-COOH was 7 mol%) was used.

### Polyether group-containing compound (K):

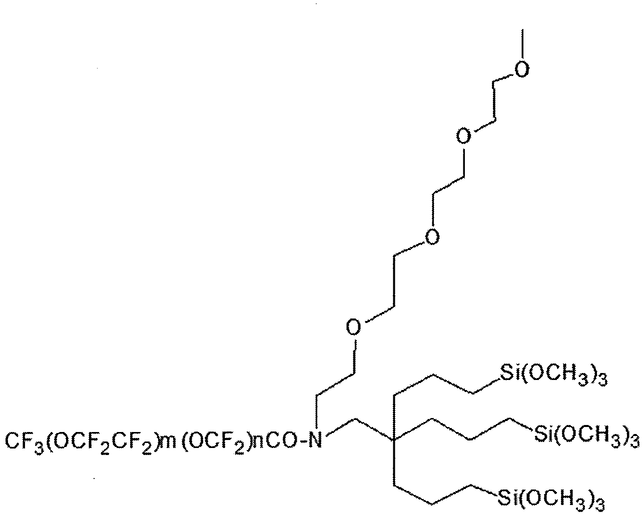

(m ≈ 28, n ≈ 26)

### Polyether group-containing compound (K'):

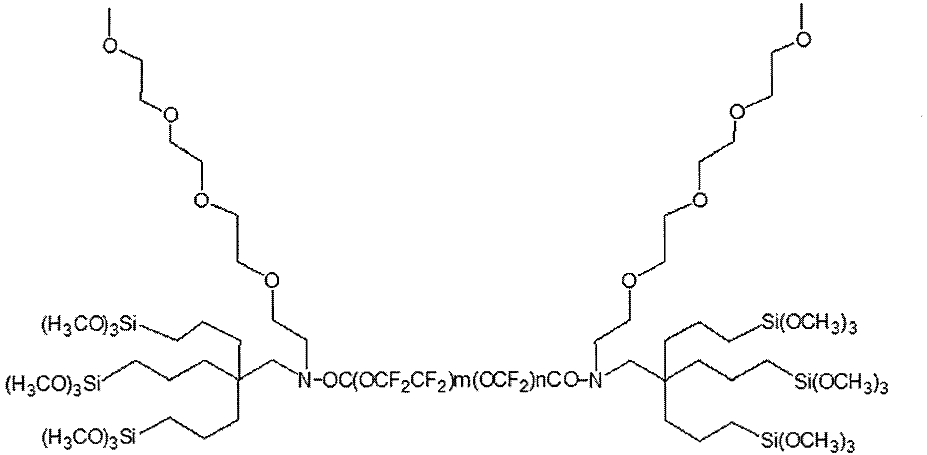

(m ≈ 28, n ≈ 26)
(Note that while being contained in trace amounts in the perfluoropolyether group, the (OCF₂CF₂CF₂CF₂) unit and the (OCF₂CF₂CF₂) unit as average formulations were omitted.)

### (Synthetic Example 12)

Here, 4.0 g of a mixture containing a polyether group-containing compound (L) and a polyether group-containing compound (L') (provided that the content of the polyether group-containing compound (L') was 5 mol%) was obtained in the same manner as Synthetic Example 11 except that 4.2 g of a mixture containing CF₃CF₂CF₂-(OCF₂CF₂CF₂)ₘ-OCF₂COOH (m ≈ 25) and HOCOCF₂-(OCF₂CF₂CF₂)ₘ-OCF₂COOH (m ≈ 25) (provided that the content of HOCOCF₂-(OCF₂CF₂CF₂)ₘ-OCF₂COOH was 5 mol%) was used.

### Polyether group-containing compound (L):

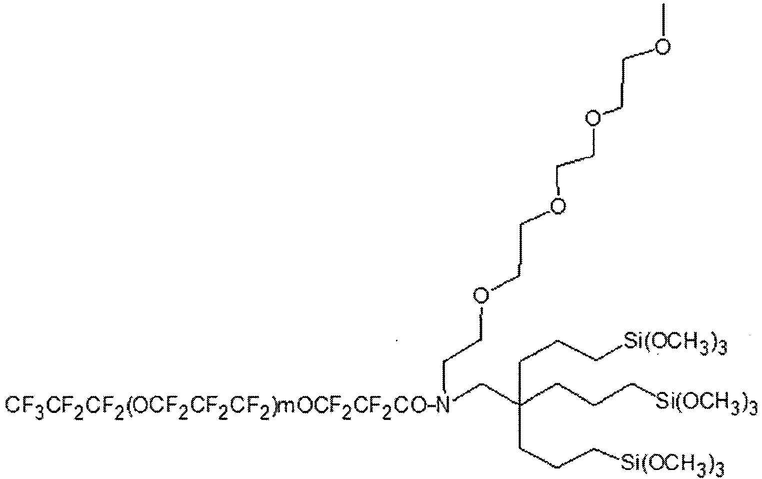

(m ≈ 25)

### Polyether group-containing compound (L'):

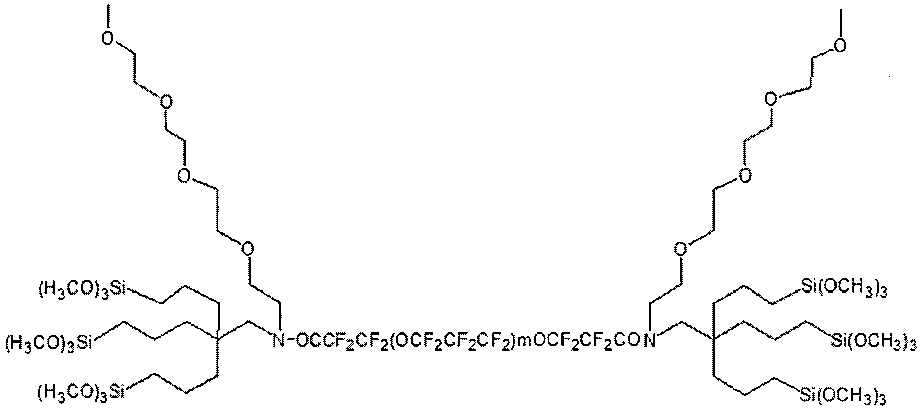

### (m ≈ 25)

### (Synthetic Example 13)

Here, 3.5 g of a mixture containing a polyether group-containing compound (M) and a polyether group-containing compound (M') (provided that the content of the polyether group-containing compound (M') was 11 mol%) was obtained in the same manner as Synthetic Examples 1 to 2 except that N-(3-oxahex-5-yl)-2,2-di(2-propenyl)-4-pentylamine was used in place of N-(3,6-dioxaheptyl)-2,2-di(2-propenyl)-4-pentylamine.

### Polyether group-containing compound (M):

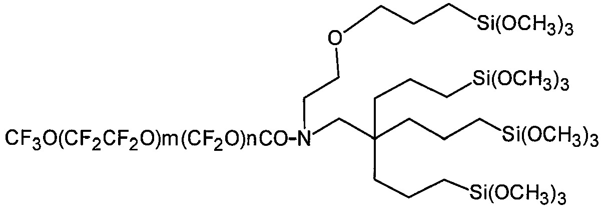

(m ≈ 21, n ≈ 35)

### Polyether group-containing compound (M'):

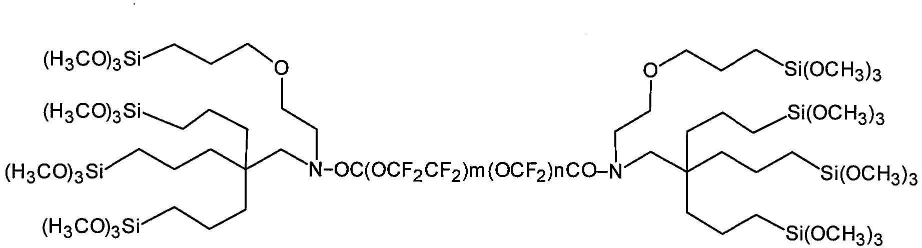

(m ≈ 21, n ≈ 35)
(Note that while being contained in trace amounts in the perfluoropolyether group, the (OCF₂CF₂CF₂CF₂) unit and the (OCF₂CF₂CF₂) unit as average formulations were omitted.)

### (Synthetic Example 14)

Here, 3.8 g of a mixture containing a polyether group-containing compound (N) and a polyether group-containing compound (N') (provided that the content of the polyether group-containing compound (N') was 7 mol%) was obtained in the same manner as Synthetic Example 13 except that 4.0 g of a mixture containing CF₃-(OCF₂CF₂)ₘ-(OCF₂)n-COOH (m ≈ 28, n ≈ 26) and HOCOCF₂-(OCF₂CF₂)ₘ-(OCF₂)ₙ-COOH (m ≈ 28, n ≈ 26) (provided that the content of HOCOCF₂-(OCF₂CF₂)ₘ-(OCF₂)ₙ-COOH was 7 mol%) was used.

### Polyether group-containing compound (N):

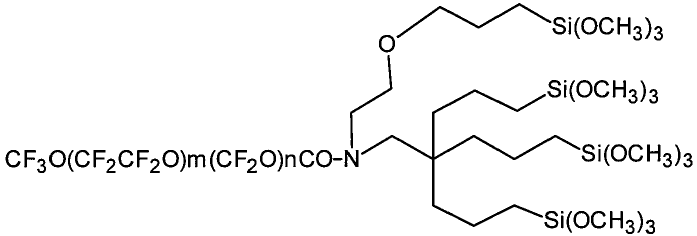

(m ≈ 28, n ≈ 26)

### Polyether group-containing compound (N'):

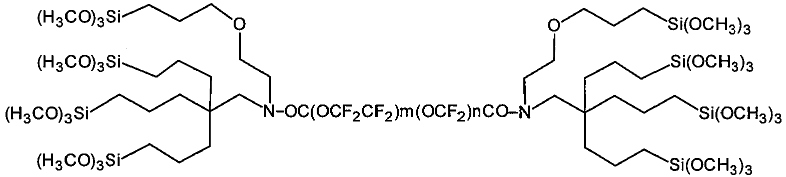

(m ≈ 28, n ≈ 26)
(Note that while being contained in trace amounts in the perfluoropolyether group, the (OCF₂CF₂CF₂CF₂) unit and the (OCF₂CF₂CF₂) unit as average formulations were omitted.)

### (Synthetic Example 15)

Here, 4.2 g of a mixture containing a polyether group-containing compound (O) and a polyether group-containing compound (O') (provided that the content of the polyether group-containing compound (O') was 5 mol%) was obtained in the same manner as Synthetic Example 13 except that 4.2 g of a mixture containing CF₃CF₂CF₂-(OCF₂CF₂CF₂)ₘ-OCF₂COOH (m ≈ 25) and HOCOCF₂-(OCF₂CF₂CF₂)ₘ-OCF₂COOH (m ≈ 25) (provided that the content of HOCOCF₂-(OCF₂CF₂CF₂)ₘ-OCF₂COOH was 5 mol%) was used.

### Polyether group-containing compound (O):

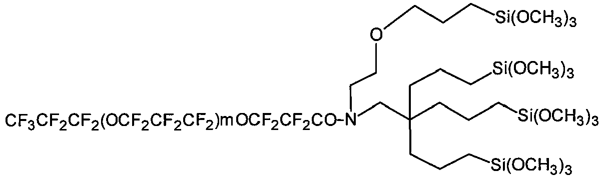

(m ≈ 25)

### Polyether group-containing compound (O'):

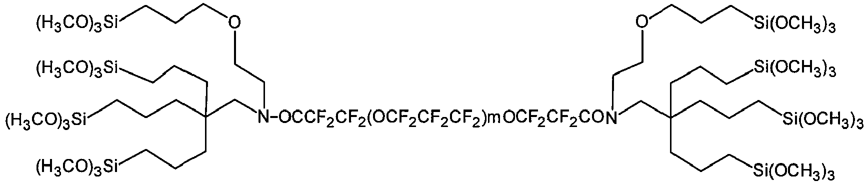

(m ≈ 25)

### (Example 1)

The mixture containing the polyether group-containing compound (B) and the polyether group-containing compound (B') obtained in Synthetic Example 2 was dissolved in hydrofluoroether (Novec HFE-7200, manufactured by 3M) so as to have a concentration of 0.1 mass%, and thus a surface-treating agent (1) was prepared.

### (Example 2)

The mixture containing the polyether group-containing compound (C) and the polyether group-containing compound (C') obtained in Synthetic Example 3 was dissolved in hydrofluoroether (Novec HFE-7200, manufactured by 3M) so as to have a concentration of 0.1 mass%, and thus a surface-treating agent (2) was prepared.

### (Example 3)

The mixture containing the polyether group-containing compound (D) and the polyether group-containing compound (D') obtained in Synthetic Example 4 was dissolved in hydrofluoroether (Novec HFE-7200, manufactured by 3M) so as to have a concentration of 0.1 mass%, and thus a surface-treating agent (3) was prepared.

### (Example 4)

The mixture containing the polyether group-containing compound (E) and the polyether group-containing compound (E') obtained in Synthetic Example 5 was dissolved in hydrofluoroether (Novec HFE-7200, manufactured by 3M) so as to have a concentration of 0.1 mass%, and thus a surface-treating agent (4) was prepared.

### (Example 5)

The mixture containing the polyether group-containing compound (F) and the polyether group-containing compound (F') obtained in Synthetic Example 6 was dissolved in hydrofluoroether (Novec HFE-7200, manufactured by 3M) so as to have a concentration of 0.1 mass%, and thus a surface-treating agent (5) was prepared.

### (Example 6)

The mixture containing the polyether group-containing compound (G) and the polyether group-containing compound (G') obtained in Synthetic Example 7 was dissolved in hydrofluoroether (Novec HFE-7200, manufactured by 3M) so as to have a concentration of 0.1 mass%, and thus a surface-treating agent (6) was prepared.

### (Example 7)

The mixture containing the polyether group-containing compound (H) and the polyether group-containing compound (H') obtained in Synthetic Example 8 was dissolved in hydrofluoroether (Novec HFE-7200, manufactured by 3M) so as to have a concentration of 0.1 mass%, and thus a surface-treating agent (7) was prepared.

### (Example 8)

The mixture containing the polyether group-containing compound (I) and the polyether group-containing compound (I') obtained in Synthetic Example 9 was dissolved in hydrofluoroether (Novec HFE-7200, manufactured by 3M) so as to have a concentration of 0.1 mass%, and thus a surface-treating agent (8) was prepared.

### (Example 9)

The mixture containing the polyether group-containing compound (J) and the polyether group-containing compound (J') obtained in Synthetic Example 10 was dissolved in hydrofluoroether (Novec HFE-7200, manufactured by 3M) so as to have a concentration of 0.1 mass%, and thus a surface-treating agent (9) was prepared.

### (Example 10)

The mixture containing the polyether group-containing compound (K) and the polyether group-containing compound (K') obtained in Synthetic Example 11 was dissolved in hydrofluoroether (Novec HFE-7200, manufactured by 3M) so as to have a concentration of 0.1 mass%, and thus a surface-treating agent (10) was prepared.

### (Example 11)

The mixture containing the polyether group-containing compound (L) and the polyether group-containing compound (L') obtained in Synthetic Example 12 was dissolved in hydrofluoroether (Novec HFE-7200, manufactured by 3M) so as to have a concentration of 0.1 mass%, and thus a surface-treating agent (11) was prepared.

### (Example 12)

The mixture containing the polyether group-containing compound (M) and the polyether group-containing compound (M') obtained in Synthetic Example 13 was dissolved in hydrofluoroether (Novec HFE-7200, manufactured by 3M) so as to have a concentration of 0.1 mass%, and thus a surface-treating agent (12) was prepared.

### (Example 13)

The mixture containing the polyether group-containing compound (N) and the polyether group-containing compound (N') obtained in Synthetic Example 14 was dissolved in hydrofluoroether (Novec HFE-7200, manufactured by 3M) so as to have a concentration of 0.1 mass%, and thus a surface-treating agent (13) was prepared.

### (Example 14)

The mixture containing the polyether group-containing compound (O) and the polyether group-containing compound (O') obtained in Synthetic Example 15 was dissolved in hydrofluoroether (Novec HFE-7200, manufactured by 3M) so as to have a concentration of 0.1 mass%, and thus a surface-treating agent (14) was prepared.

### (Comparative Examples 1 and 2)

Comparative surface-treating agents (1) and (2) were prepared in the same manner as Example 2 except that the following control compounds (1) and (2) were used in place of the mixture containing polyether group-containing compound (D) and the polyether group-containing compound (D'), respectively.

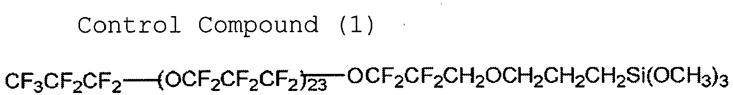

Control Compound (2) CF₃CF₂CF₂CF₂CF₂CF₂CH₂CH₂Si(OCH₂CH₃)₃

### (Static contact angle)

The static contact angle was measured by the following method using a fully automatic contact angle meter DropMaster 700 (manufactured by Kyowa Interface Science Co., Ltd.).

### <Method for measuring static contact angle>

The static contact angle was determined by dripping 2 µL of water from a microsyringe onto a horizontally placed substrate and taking a still image with a video microscope 1 second after the dripping.

### (Formation of cured film)

The surface-treating agents (1) to (14) and the comparative surface-treating agents (1) to (2) were each applied to a chemically tempered glass ("Gorilla" glass, manufactured by Corning Incorporated, thickness 0.7 mm) using a spin coater. The spin coating conditions were 300 rpm for 3 seconds and 2,000 rpm for 30 seconds. The coated glass was heated at 150°C for 30 minutes in a constant-temperature vessel in air to form a cured film.

### [Evaluation of cured film properties]

Properties of the resulting cured film were evaluated as follows.

### <Static contact angle>

### (Initial evaluation)

First, as an initial evaluation, after the cured film was formed, the static water contact angle of the surface with which nothing was brought into contact yet was measured.

### (Evaluation after wiping with ethanol)

The cured film was then wiped back and forth five times with Kimwipe (trade name, manufactured by Jujo Kimberly Co., Ltd.) sufficiently soaked with ethanol, and dried. The static water contact angle of the cured film after being dried was measured.

### <Fingerprint adherability and removability by wiping>

### (Fingerprint adherability)

A finger was pressed against a cured film formed using the surface-treating agents or the comparative surface-treating agents, and how easily a fingerprint adheres was visually judged. Evaluations were made according to the following criteria:
A: Fingerprint unlikely adhered, or not noticeable even when adhered.
B: Adhered fingerprint was little, but fingerprint sufficiently confirmed.
C: Fingerprint adhered as clearly as fingerprint on untreated glass substrate.

### (Fingerprint removability by wiping)

After the above fingerprint adherability test, the adhered fingerprint was wiped off back and forth five times with Kimwipe (trade name, manufactured by Jujo Kimberly Co., Ltd.), and how easily the adhered fingerprint was wiped off was visually judged. Evaluations were made according to the following criteria:
A: Fingerprint completely wiped off.
B: Fingerprint wiping marks remained.
C: Fingerprint wiping marks spread, and difficult to remove.

The results of the above evaluations are shown in Table 1 below.

**[Table 1]**

| Treatment agent | | Contact angle (degree) | | Fingerprint adherability and removability by wiping | |
|---|---|---|---|---|---|
| | | Initial evaluation | Ethanol After wiping | Fingerprint adherability | Fingerprint removability by wiping |
| Surface-treating agent (1) | Example 1 | 113 | 113 | A | A |
| Surface-treating agent (2) | Example 2 | 114 | 114 | A | A |
| Surface-treating agent (3) | Example 3 | 113 | 113 | A | A |
| Surface-treating agent (4) | Example 4 | 113 | 113 | A | A |
| Surface-treating agent (5) | Example 5 | 113 | 113 | A | A |
| Surface-treating agent (6) | Example 6 | 112 | 113 | A | A |
| Surface-treating agent (7) | Example 7 | 112 | 112 | A | A |
| Surface-treating agent (8) | Example 8 | 114 | 114 | A | A |
| Surface-treating agent (9) | Example 9 | 114 | 114 | A | A |
| Surface-treating agent (10) | Example 10 | 115 | 115 | A | A |
| Surface-treating agent (11) | Example 11 | 113 | 113 | A | A |
| Surface-treating agent (12) | Example 12 | 112 | 112 | A | A |
| Surface-treating agent (13) | Example 13 | 113 | 113 | A | A |
| Surface-treating agent (14) | Example 14 | 113 | 113 | A | A |
| Comparative surface-treating agent (1) | Comparative Example 1 | 113 | 112 | A | B |
| Comparative surface-treating agent (2) | Comparative Example 2 | 105 | 103 | B | C |

As shown in the results provided above, the contact angles of the cured films formed using the surface-treating agents (1) to (14) were not decreased even when the films were wiped using ethanol. On the other hand, the contact angles of the cured films formed using the comparative surface-treating agents (1) and (2) were decreased when the films were wiped using ethanol. This is considered to be because the cured films formed with the comparative surface-treating agents (1) and (2) have poor chemical resistance (i.e., durability against solvents).

### Evaluation of cured film friction resistance

The friction resistance of the resulting cured films was evaluated as follows.

### Test of friction resistance against eraser

Using a rubbing tester (manufactured by Shinto Scientific Co., Ltd.), the water-resisting contact angle was measured every 2,500 rubs under the following conditions, and the test was continued until it reached 10,000 rubs or until the angle became less than 100 degrees. The test environment conditions were 25°C and a humidity of 40% RH.
Eraser: Raber Eraser (manufactured by Minoan)
Contact area: 6 mmϕ
Moving distance (one way): 30 mm
Moving speed: 3,600 mm/min
Load: 1 kg/6 mmϕ

The results of the above evaluations are shown in Table 2 below. In the table, "-" means that the measurement was not performed.

**[Table 2]**

| Treatment agent | | Contact angle (degree) | | | | |
|---|---|---|---|---|---|---|
| | | 0 times | 2,500 times | 5,000 times | 7,500 times | 10,000 times |
| Surface-treating agent (1) | Example 1 | 113 | 111 | 107 | 103 | 101 |
| Surface-treating agent (2) | Example 2 | 114 | 112 | 110 | 106 | 105 |
| Surface-treating agent (3) | Example 3 | 113 | 108 | 102 | 91 | - |
| Surface-treating agent (4) | Example 4 | 113 | 111 | 106 | 103 | 98 |
| Surface-treating agent (5) | Example 5 | 113 | 108 | 105 | 101 | 96 |
| Surface-treating agent (6) | Example 6 | 112 | 114 | 112 | 110 | 106 |
| Surface-treating agent (7) | Example 7 | 112 | 111 | 109 | 100 | 95 |
| Surface-treating agent (8) | Example 8 | 114 | 108 | 104 | 101 | 94 |
| Surface-treating agent (9) | Example 9 | 114 | 107 | 102 | 101 | 100 |
| Surface-treating agent (10) | Example 10 | 115 | 108 | 105 | 102 | 97 |
| Surface-treating agent (11) | Example 11 | 113 | 110 | 105 | 103 | 101 |
| Surface-treating agent (12) | Example 12 | 112 | 110 | 106 | 102 | 100 |
| Surface-treating agent (13) | Example 13 | 113 | 111 | 105 | 97 | - |
| Surface-treating agent (14) | Example 14 | 113 | 104 | 102 | 99 | - |
| Comparative surface-treating agent (1) | Comparative Example 1 | 113 | 89 | - | - | - |

### Industrial Applicability

The fluoropolyether group-containing compound of the present disclosure can be suitably utilized to form a surface-treating layer on the surface of a variety of substrates, in particular optical members for which friction durability is required.

## Claims

1. A fluoropolyether group-containing silane compound represented by the following formula (1) or (2): 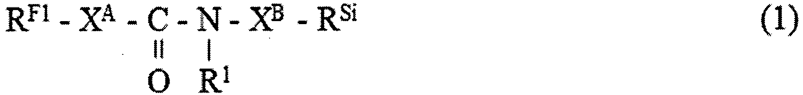 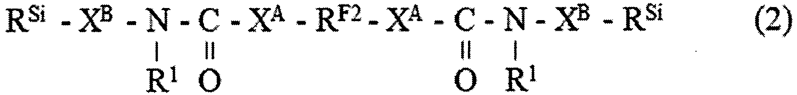 wherein
R^{F1} is Rf¹-R^{F}-O_{q}-;
R^{F2} is -Rf²ₚ-R^{F}-O_{q}-;
Rf¹ is a C₁₋₁₆ alkyl group optionally substituted with one or more fluorine atoms;
Rf² is a C₁₋₆ alkylene group optionally substituted with one or more fluorine atoms;
R^{F} is each independently a divalent fluoropolyether group;
p is 0 or 1;
q is each independently 0 or 1;
R¹ is each independently -R³-(OR²)ₘ-Oₙ-R⁴-R⁵;
R² is each independently at each occurrence a C₁-₆ alkylene group;
m is an integer of 2 to 10;
n is 0 or 1;
R³ is a single bond or a C₁-₆ alkylene group;
R⁴ is a single bond or a C₁-₆ alkylene group;
R⁵ is a hydrogen atom or R^{Si};
R^{Si} is each independently a monovalent group containing a Si atom to which a hydroxyl group or a hydrolyzable group is bonded;
X^{A} is each independently a single bond or a group represented by the following formula:
-(X⁵¹)ₚ5-
wherein
X⁵¹ is each independently at each occurrence a group selected from the group consisting of -O-, -S-, an o-, m- or p-phenylene group, -C(O)O-, -OC(O)-, -Si(R⁵³)₂-, - (Si(R⁵³)₂O)ₘ₅-Si(R⁵³)₂-, -CONR⁵⁴-, -NR⁵⁴CO-, -O-CONR⁵⁴-, -NR⁵⁴COO-, -NR⁵⁴-, and -(CH₂)ₙ₅-,
R⁵³ is each independently at each occurrence a phenyl group, a C₁-₆ alkyl group, or a C₁₋₆ alkoxy group,
R⁵⁴ is each independently at each occurrence a hydrogen atom, a phenyl group, or a C₁-₆ alkyl group,
m5 is each independently at each occurrence an integer of 1 to 100,
n5 is each independently at each occurrence an integer of 1 to 20, and
p5 is an integer of 1 to 10; and
X^{B} is each independently a single bond or a group represented by the following formula:
-(X⁶¹)ₚ₆-
wherein
X⁶¹ is each independently at each occurrence a group selected from the group consisting of -O-, -S-, an o-, m- or p-phenylene group, -C(O)O-, -OC(O)-, -Si(R⁶³)₂-, - (Si(R⁶³)₂O)ₘ₆-Si(R⁶³)₂-, -CONR⁶⁴-, -NR⁶⁴CO-, -O-CONR⁶⁴-, -NR⁶⁴COO-, -NR⁶⁴-, and -(CH₂)ₙ₆-,
R⁶³ is each independently at each occurrence a phenyl group, a C₁-₆ alkyl group, or a C₁-₆ alkoxy group,
R⁶⁴ is each independently at each occurrence a hydrogen atom, a phenyl group, or a C₁-₆ alkyl group,
m6 is each independently at each occurrence an integer of 1 to 100,
n6 is each independently at each occurrence an integer of 1 to 20, and
p6 is an integer of 1 to 10.

2. The fluoropolyether group-containing silane compound according to claim 1, wherein
Rf¹ is each independently at each occurrence a C₁-₁₆ perfluoroalkyl group, and
Rf² is each independently at each occurrence a C₁-₆ perfluoroalkylene group.

3. The fluoropolyether group-containing silane compound according to claim 1 or 2, wherein R^{F} is each independently at each occurrence a group represented by the following formula:
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
wherein R^{Fa} is each independently at each occurrence a hydrogen atom, a fluorine atom, or a chlorine atom, and
a, b, c, d, e, and f are each independently an integer of 0 to 200, the sum of a, b, c, d, e, and f is 1 or more, and the occurrence order of the respective repeating units enclosed in parentheses provided with a, b, c, d, e, or f is not limited in the formula, provided that when all R^{Fa} groups are hydrogen atoms or chlorine atoms, at least one of a, b, c, e, and f is 1 or more.

4. The fluoropolyether group-containing silane compound according to claim 3, wherein R^{Fa} is a fluorine atom.

5. The fluoropolyether group-containing silane compound according to any one of claim 1 to 4, wherein R^{F} is each independently at each occurrence a group represented by the following formula (f1), (f2), (f3), (f4), or (f5):
-(OC₃F₆)_{d}-(OC₂F₄)ₑ- (f1)
wherein d is an integer of 1 to 200, and e is 0 or 1;
-(OC₄F₈)_{c}-(OC₃F₆)_{d}-(OC₂F₄)ₑ-(OCF₂)_{f}- (f2)
wherein c and d are each independently an integer of 0 to 30,
e and f are each independently an integer of 1 to 200,
the sum of c, d, e, and f is an integer of 10 to 200, and
the occurrence order of the respective repeating units enclosed in parentheses provided with a subscript c, d, e, or f is not limited in the formula;
-(R⁶-R⁷)_{g}- (f3)
wherein R⁶ is OCF₂ or OC₂F₄,
R⁷ is a group selected from OC₂F₄, OC₃F₆, OC₄F₈, OC₅F₁₀, and OC₆F₁₂, or a combination of two or three groups selected from these groups, and
g is an integer of 2 to 100;
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)
wherein e is an integer of 1 or more and 200 or less, a, b, c, d, and f are each independently an integer of 0 or more and 200 or less, the sum of a, b, c, d, e, and f is at least 1, and the occurrence order of the respective repeating units enclosed in parentheses provided with a, b, c, d, e, or f is not limited in the formula; and
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein f is an integer of 1 or more and 200 or less, a, b, c, d, and e are each independently an integer of 0 or more and 200 or less, the sum of a, b, c, d, e, and f is at least 1, and the occurrence order of the respective repeating units enclosed in parentheses provided with a, b, c, d, e, or f is not limited in the formula.

6. The fluoropolyether group-containing silane compound according to any one of claims 1 to 5, wherein R⁵ is a hydrogen atom.

7. The fluoropolyether group-containing silane compound according to any one of claims 1 to 5, wherein R⁵ is R^{Si}.

8. The fluoropolyether group-containing silane compound according to any one of claims 1 to 7, wherein R^{Si} is each independently a group represented by the following formula (S1), (S2), (S3), (S4), or (S5): 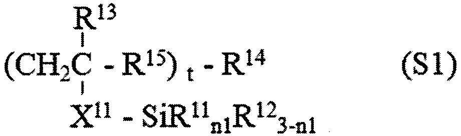
- SiR¹¹ₙ₁R¹²₃₋ₙ₁ (S2)
- SiR^{a1}ₖ₁R^{b1}ₗ₁R^{c1}ₘ₁ (S3)
- CR^{d1}ₖ₂R^{e1}ₗ₂R^{f1}ₘ₂ (S4)
- NR^{g1}R^{h1} (S3)
wherein
R¹¹ is each independently at each occurrence a hydroxyl group or a hydrolyzable group;
R¹² is each independently at each occurrence a hydrogen atom or a monovalent organic group;
n1 is each independently an integer of 0 to 3 for each (SiR¹¹ₙ₁R¹²₃₋ₙ₁) unit;
X¹¹ is each independently at each occurrence a single bond or a divalent organic group;
R¹³ is each independently at each occurrence a hydrogen atom or a monovalent organic group;
t is each independently at each occurrence an integer of 2 or more;
R¹⁴ is each independently at each occurrence a hydrogen atom, a halogen atom, or -X¹¹-SiR¹¹ₙ₁R¹²₃₋ₙ₁;
R¹⁵ is each independently at each occurrence a single bond, an oxygen atom, an alkylene group having 1 to 6 carbon atoms, or an alkyleneoxy group having 1 to 6 carbon atoms;
R^{a1} is each independently at each occurrence -Z¹-SiR²¹ₚ₁R²²_{q1}R²³ᵣ₁;
Z¹ is each independently at each occurrence an oxygen atom or a divalent organic group;
R²¹ is each independently at each occurrence -Z^{1'}-SiR^{21'}ₚ₁,R^{22'}_{q1},R^{23'}ᵣ₁,;
R²² is each independently at each occurrence a hydroxyl group or a hydrolyzable group;
R²³ is each independently at each occurrence a hydrogen atom or a monovalent organic group;
p1 is each independently at each occurrence an integer of 0 to 3;
q1 is each independently at each occurrence an integer of 0 to 3;
r1 is each independently at each occurrence an integer of 0 to 3;
the sum of p1, q1, and r1 is 3;
Z^{1'} is each independently at each occurrence an oxygen atom or a divalent organic group;
R^{21'} is each independently at each occurrence -Z^{1"}-SiR^{22"}_{q1"}R^{23"}_{r1"};
R^{22'} is each independently at each occurrence a hydroxyl group or a hydrolyzable group;
R^{23'} is each independently at each occurrence a hydrogen atom or a monovalent organic group;
p1' is each independently at each occurrence an integer of 0 to 3;
q1' is each independently at each occurrence an integer of 0 to 3;
r1' is each independently at each occurrence an integer of 0 to 3;
the sum of p1', q1', and r1' is 3;
Z^{1"} is each independently at each occurrence an oxygen atom or a divalent organic group;
R^{22"} is each independently at each occurrence a hydroxyl group or a hydrolyzable group;
R^{23"} is each independently at each occurrence a hydrogen atom or a monovalent organic group;
q1" is each independently at each occurrence an integer of 0 to 3;
r1" is each independently at each occurrence an integer of 0 to 3;
the sum of q1" and r1" is 3;
R^{b1} is each independently at each occurrence a hydroxyl group or a hydrolyzable group;
R^{c1} is each independently at each occurrence a hydrogen atom or a monovalent organic group;
k1 is each independently at each occurrence an integer of 1 to 3;
l1 is each independently at each occurrence an integer of 0 to 3;
m1 is each independently at each occurrence an integer of 0 to 3;
the sum of k1, l1, and m1 is 3;
R^{d1} is each independently at each occurrence -Z²-CR³¹ₚ₂R³²_{q2}R³³ᵣ₂;
Z² is each independently at each occurrence a single bond, an oxygen atom, or a divalent organic group;
R³¹ is each independently at each occurrence -Z^{2'}-CR^{32'}_{q2'}R^{33'}_{r2'};
R³² is each independently at each occurrence -Z³-SiR³⁴ₙ₂R³⁵₃₋ₙ₂;
R³³ is each independently at each occurrence a hydrogen atom, a hydroxyl group, or a monovalent organic group;
p2 is each independently at each occurrence an integer of 0 to 3;
q2 is each independently at each occurrence an integer of 0 to 3;
r2 is each independently at each occurrence an integer of 0 to 3;
the sum of p2, q2, and r2 is 3;
Z^{2'} is each independently at each occurrence a single bond, an oxygen atom, or a divalent organic group;
R^{32'} is each independently at each occurrence -Z³-SiR³⁴ₙ₂R³⁵₃₋ₙ₂;
R^{33'} is each independently at each occurrence a hydrogen atom, a hydroxyl group, or a monovalent organic group;
q2' is each independently at each occurrence an integer of 0 to 3;
r2' is each independently at each occurrence an integer of 0 to 3;
the sum of q2' and r2' is 3;
Z³ is each independently at each occurrence a single bond, an oxygen atom, or a divalent organic group;
R³⁴ is each independently at each occurrence a hydroxyl group or a hydrolyzable group;
R³⁵ is each independently at each occurrence a hydrogen atom or a monovalent organic group;
n2 is each independently at each occurrence an integer of 0 to 3;
R^{e1} is each independently at each occurrence -Z³-SiR³⁴ₙ₂R³⁵₃₋ₙ₂;
R^{f1} is each independently at each occurrence a hydrogen atom, a hydroxyl group, or a monovalent organic group;
k2 is each independently at each occurrence an integer of 0 to 3;
l2 is each independently at each occurrence an integer of 0 to 3;
m2 is each independently at each occurrence an integer of 0 to 3;
the sum of k2, l2, and m2 is 3;
R^{g1} and R^{h1} are each independently at each occurrence - Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂; and
Z⁴ is each independently at each occurrence a single bond, an oxygen atom, or a divalent organic group;
provided that in the formulae (S1), (S2), (S3), (S4), and (S5), there is at least one Si atom to which a hydroxyl group or a hydrolyzable group is bonded.

9. The fluoropolyether group-containing silane compound according to claim 8, wherein R^{Si} bonded to X^{B} is a group represented by the formula (S3) or (S4).

10. The fluoropolyether group-containing silane compound according to claim 8 or 9, wherein R^{Si} in R¹ is a group represented by the formula (S2).

11. The fluoropolyether group-containing silane compound according to any one of claims 1 to 10, wherein X^{A} is each independently a single bond or a group represented by the following formula:
-(R^{51'})_{p5'}-(X^{51'})_{q5'}-(R^{51'})_{p5"}-
wherein
R^{51'} is each independently a C₁₋₆ alkylene group,
X^{51'} is O,
p5' is 0 or 1,
p5" is 0 or 1, and
q5' is 0 or 1,
provided that at least one of p5' and p5" is 1; and
X^{B} is each independently a single bond or a group represented by the following formula:
-(R^{61'})_{p6'}-(X^{61'})_{q6'}-(R^{61'})_{p6"}-
wherein
R^{61'} is each independently a C₁-₆ alkylene group,
X^{61'} is O,
p6' is 0 or 1,
p6" is 0 or 1, and
q6' is 0 or 1,
provided that at least one of p6' and p6" is 1.

12. The fluoropolyether group-containing silane compound according to any one of claims 1 to 11, wherein X^{A} is a single bond, and X^{B} is a C₁-₆ alkylene group.

13. A surface-treating agent comprising the fluoropolyether group-containing silane compound according to any one of claims 1 to 12.

14. The surface-treating agent according to claim 13, further comprising one or more other components selected from a fluorine-containing oil, a silicone oil, and a catalyst.

15. The surface-treating agent according to claim 13 or 14, further comprising a solvent.

16. The surface-treating agent according to any one of claims 13 to 15, which is used as an antifouling coating agent or a water-proof coating agent.

17. An article comprising a substrate and a layer on a surface of the substrate, wherein the layer is formed of the fluoropolyether group-containing silane compound according to any one of claims 1 to 12 or the surface-treating agent according to any one of 13 to 16.

18. The article according to claim 17, which is an optical member.
